(19) Europäisches Patentamt
European Patent Office
Office européen des brevets

(11) EP 0 352 677 B1

(12) EUROPÄISCHE PATENTSCHRIFT

(45) Veröffentlichungstag und Bekanntmachung des Hinweises auf die Patenterteilung:
**02.10.1996 Patentblatt 1996/40**

(51) Int Cl.[6]: **C08G 59/50**, C08G 59/14, C08G 18/58, C09D 17/00

(21) Anmeldenummer: **89113521.2**

(22) Anmeldetag: **22.07.1989**

(54) **Trägerharz für Pigmentpasten, seine Herstellung und Verwendung**

Resin substrate for pigment pastes, its preparation and use

Substrat résineux pour pâtes pigmentaires, sa préparation et son utilisation

(84) Benannte Vertragsstaaten:
**AT DE ES FR IT SE**

(30) Priorität: **28.07.1988 DE 3825584**

(43) Veröffentlichungstag der Anmeldung:
**31.01.1990 Patentblatt 1990/05**

(73) Patentinhaber: **HOECHST AKTIENGESELLSCHAFT**
**65926 Frankfurt am Main (DE)**

(72) Erfinder:
- **Hönel, Michael, Dr.**
  **D-6200 Wiesbaden (DE)**
- **Ziegler, Peter, Dr.**
  **D-6500 Mainz (DE)**
- **Sprenger, Walter**
  **D-6110 Dieburg (DE)**
- **Wendt, Wolfgang**
  **D-5600 Wuppertal 2 (DE)**

(56) Entgegenhaltungen:
**EP-A- 0 012 963**
**EP-A- 0 237 997**
**EP-A- 0 350 618**
**US-A- 4 134 866**
**US-A- 4 170 579**
**US-A- 4 801 662**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 352 677 B1

Printed by Jouve, 75001 PARIS (FR)

## Beschreibung

In der Lackindustrie ist es allgmein üblich, bei der Herstellung von pigmentierten Lacken die Pigmente in einem Teil des zur Verwendung gelangenden Bindemittels oder in speziellen Bindemitteln (Pastenharzen bzw. Pigment-Trägerharzen) zu vermahlen. Diese sogenannten Mahlpasten (bzw. Pigmentpasten) werden anschließend mit dem restlichen Bindemittel "aufgelackt".

Insbesondere werden solche Mahlpasten beim Einsatz von lösungsmittelarmen Elektrotauchlacken (K-ETL) benötigt, da

1. hochpigmentierte Mahlpasten mit geringem Lösemittelgehalt die Lösemittelbilanz nicht nachhaltig beeinflussen;
2. es sich bei dem Betrieb von K-ETL-Becken als vorteilhaft erweist, die Zugabe des Nachsetzmaterials mit zwei getrennten Komponenten, nämlich einer höherpigmentierten Farbkomponente und einer Klarlackkomponente, durchzuführen. Eine gegebenenfalls automatische Steuerung der Badführung wird dadurch wesentlich erleichtert;
3. Pigmente in der Regel nicht direkt in eine wäßrige Dispersion bzw. ein K-ETL-Bad eingebracht werden können. Die Gründe hierfür sind vielfältig. Zum einen tendieren (ungenügend benetzte) Pigmente in wäßrigen Systemen dazu, zu agglomerieren und entsprechend inadequate Niederschläge auf abgeschiedenen Filmen zu bilden (vor allem auf waagrechten Flächen des Werkstückes). Zum anderen müssen Pigmente sehr fein vermahlen werden (< 10 µm, vorzugsweise < 3 µm), um bei entsprechender Benetzung stabile Pigment-Dispersionen bilden zu können.

Die für derartige Mahlpasten eingesetzten Pastenharze müssen eine Reihe von Eigenschaften erfüllen. Eine wichtige Eigenschaft ist dabei ein gutes Benetzungsvermögen für die jeweiligen Pigmente. Daneben müssen sie mit dem Hauptbindemittel gut verträglich sein und dürfen in der erforderlichen Menge die Eigenschaften des Hauptbindemittels nicht wesentlich verändern. Überdies sollen diese Pastenharze eine relativ niedrige Viskosität aufweisen. Weiterhin sollen auch hochpigmentierte Mahlpasten mit einem Pigment/Bindemittel-Verhältnis (PBV) von > 2:1, vorzugsweise von > 6:1 und inbesondere von >12:1 lagerstabil sein, d. h., die Pigmente dürfen nicht sedimentieren bzw. Agglomerate bilden. Auch sollen die Pasten nicht eindicken (zum Beispiel durch Aufbau von Strukturviskosität oder Thixotropie), da sie für den Einsatz in der Praxis über einen längeren Zeitraum hinweg pumpfähig bleiben müsssen. Weiterhin ist es vorteilhaft, als spezielle Pastenharze Bindemittel einzusetzen, die unter den für K-ETL üblichen Bedingungen abscheidbar sind. Dadurch wird eine Anreicherung im Bad und damit eine Kontamination der Abwässer vermieden. Es dürfen auch derart abgeschiedene Pastenharze nicht nachteilig für Filmverlauf (zum Beispiel durch Kraterbildung) und Härtung sein.

In der AT-Patentschrift 380 264 werden Pastenharze beschrieben, die durch gezielte Modifizierung von niedermolekularen Di- oder Polyepoxydverbindungen unter Einbau von Oxazolidingruppierungen erhalten werden. Diese Systeme zeichnen sich durch hohe Pigmentierung aus, neigen aber bei Alterung zum Aufbau von Thixotropie und Strukturviskosität.

Die EP-Offenlegungschriften 028 402 und 0 076 955 offenbaren gleichfalls Oxazolidingruppen tragende Bindemittel; allerdings kann ein PBV von 3:1 ohne Agglomeratbildung nicht überschritten werden.

In der US-Patentschrift 3 936 405 werden Oniumgruppen, insbesondere quaternäre Ammoniumgruppen tragende modifizierte Epoxidharze als günstige Pastenharze beschrieben. Die danach erhältlichen Mahlpasten ermöglichen ein PBV von ca. 4:1 (Beispiel XI).

Aus den EP-Offenlegungsschriften 107 088, 107 089 und 107 098 sind ebenfalls Kunstharze bekannt, die quaternäre Ammoniumgruppen tragen und als höher pigmentierbare Pastenharze verwendet werden können (PBV ≥ 20:1). Nachteilig ist bei diesen Pastenharzen u. a., daß trotz gleicher Abscheidebedingungen unterschiedliche Schichtstärken und Oberflächenqualitäten bei verschiedenen Untergründen auftreten.

In der Automobilindustrie kommen als Untergründe vor allem Blankblech, zinkphosphatiertes Stahlblech, (feuer- oder eletrogalvanisch) verzinkte Stahlbleche und Aluminium in Betracht. Dabei ist es ein wesentliches Kriterium, daß neben störungsfreien Oberflächen (z.B. L-Blech-Test; keine Körnungen; keine Pieken, Stippen u. ä.) auch vergleichbare Schichtstärken erzielt werden. Insbesondere auf Aluminium neigen bekannte Pastenharze zu dicker und damit oft schwammiger Schicht.

In der EP-Offenlegungschrift 203 024 werden schließlich Pastenharze beschrieben, die Umsetzungsprodukte von aliphatischen Polyepoxiden mit Polyetheraminen sind. Pastenharze dieser Zusammensetzung zeigen vor allem gute Antischaumwirkung. Andererseits können nicht sehr hohe, stabile Pigmentierungshöhen (PBV) erzielt werden. Auch benötigen die K-ETL-Dispersionen spezielle Antikratermittel für die angeführten Bindemittel-Kombinationen.

Es wurde nun gefunden, daß sich vorstehende Nachteile durch Pastenharze auf Basis von modifizierten Epoxyverbindungen mit quaternären Ammoniumgruppen überraschenderweise weitgehend vermeiden lassen.

Die Erfindung betrifft daher Pastenharze auf Basis von Epoxyverbindungen, wobei diese Pastenharze enthalten

(a) quaternäre Ammoniumgruppen der Formel (Ia)

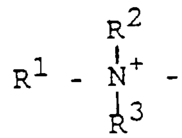 (Ia)

in der die Reste $R^1$ bis $R^3$ unabhängig voneinander für einen, gegebenenfalls OH-Gruppen und/oder Aminogruppen tragenden und/oder O-Atome enthaltenden Kohlenwasserstoffrest mit 1 bis 7 C-Atomen stehen, oder zweier dieser Reste einen cycloaliphatischen Ring bilden, und/oder quaternäre Ammoniumgruppen der Formel (Ib)

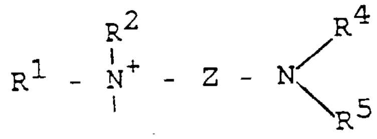 (Ib)

in der die Reste $R^1$ und $R^2$ die obige Bedeutung haben,

Z für einen linearen, verzweigten oder cyclischen Alkylenrest mit 2 bis 18 C-Atomen steht, der gegebenenfalls OH-Gruppen tragen und/oder O-Atome enthalten kann, und

$R^4$ und $R^5$ unabhängig voneinander einen Kohlenwaserstoffrest mit 2 bis 50 C-Atomen bedeuten, der gegebenenfalls OH- und/oder Silan-Gruppen tragen und/oder O-Atome enthalten kann, oder einer der beiden Reste $R^4$/$R^5$ mit Z einen Ring mit vorzugsweise 4 bis 6 C-Atomen bilden kann,

(b) OH-Gruppen und

(c) Urethangrüppierüngen, die an die Epoxyverbindung gebunden sind, und von denen sich mindestens 10 Mol-%, vorzugsweise mindestens 20 Mol-% und insbesondere 50-100 Mol % von einem langkettigen, monofunktionellen Isocyanat (D1) mit mindestens 8 C-Atomen ableiten,

wobei das mittlere Molekulargewicht ($\overline{M}$n; bestimmt mittels Gelchromatographie; PS-Standard) dieser Pastenharze 500 bis 10000 beträgt, unit der Maßgabe, daß das Pastenharz keine Gruppen der Formel (Ic) enthält,

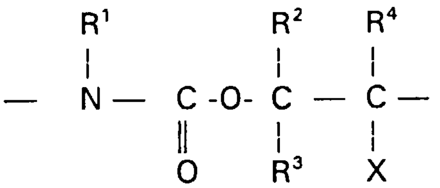 (Ic)

worin $R^1$ bis $R^4$ und X die in Anspruch 1 angegebenen Bedeutungen haben.

Weiterhin hat die Erfindung ein Verfahren zur Herstellung dieser Pastenharze, deren Verwendung für Pigmentpasten sowie diese Pigmentpasten zum Gegenstand.

Die erfindungsgemäßen Pastenharze besitzen vorzugsweise
mittlere Molekulargewichte ($\overline{M}_n$) von 1000 bis 5000. Die OH-Zahlen betragen zumeist 10 bis 200, vorzugsweise 20 bis 90 mg KOH/g, die Epoxyzahlen liegen zumeist unterhalb 0,5, vorzugsweise zwischen 0 und 0,3, und die Menge an quaternären Stickstoff pro Gramm beträgt im allgemeinen 0,2 bis 20, vorzugsweise 0,8 bis 5 Milliäquivalente.

Die Zahl der Gruppen (a) pro Molekül (statistisches Mittel) liegt im allgemeinen zwischen 1 bis 4, vorzugsweise 2 oder 3, die von (b) zwischen 1 und 20, vorzugsweise 2 bis 8 und die von (c) zwischen 1 bis 15, vorzugsweise zwischen 1 und 6, und insbesondere zwischen 2 und 4. Die Zahl der Gruppen (c) ist dabei innerhalb der vorstehenden Bereiche von der Kettenlänge des Isocyanats (D1) abhängig, wobei diese Zahl entsprechend niedriger liegen kann, je langkettiger dieses Isocyanat ist.

Die Reste $R^1$ bis $R^3$ in obiger Formel (Ia) bedeuten vorzugsweise einen geradlinigen Alkylrest mit 1 bis 7, vorzugsweise 1 bis 4 C-Atomen, der gegebenenfalls OH-Gruppen tragen kann, oder einen Cycloalkylrest mit vorzugsweise 5 oder 6 C-Atomen, der Heteroatome wie O enthalten kann, oder einen Polyoxyalkyl-Rest mit bis zu 7 C-Atomen, vorzugsweise 2 bis 4 C-Atomen. Weiterhin können $R^1$ bis $R^3$ auch araliphatische Reste mit 7 C-Atomen oder Arylreste mit 6 oder 7 C-Atomen darstellen, wenngleich diese Reste weniger bevorzugt sind.

Als Beispiele für derartige Reste seien hier genannt:
Methyl-, Ethyl-, Propyl-(n- oder iso), Butyl-(n- oder iso) und höhere Homologe bis einschließlich Heptyl-, Cyclopentyl-, Cyclohexyl-, Tetrahydrofurfuryl, Benzyl-, Furfuryl-, Phenyl-, 2-Hydroxy-ethyl-, 3-Hydroxypropyl-, 5-Hydroxy-3-oxo-pentyl; weiterhin N-Methylpiperidin, N-Methylmorpholin, wobei der Piperidin- oder Morpholinring von zweier dieser Reste $R^1$ bis $R^3$ gebildet wird. Besonders bevorzugt sind hierbei kleinere, sterisch weniger wirksame Reste wie Methyl-, Ethyl-, Propyl-, Hydroxyethyl-, Hydroxypropyl.

Der Rest Z in obiger Formel (Ib) besitzt vorzugsweise 3 bis 9 C-Atome. Beispielsweise seien hier der Ethylen-, Propylen-, Butylen-, Trimethylhexamethylen- und Cyclohexylen-Rest genannt.

Die Reste $R^4$ und $R^5$ bedeuten vorzugsweise einen Kohlenwasserstoffrest mit 20 bis 42 C-Atomen, vorzugsweise einen Alkylrest oder einen Polyoxyalkylrest, der vorzugsweise OH-Gruppen trägt. Als Silangruppen, die an diesen Resten hängen können, kommen beispielsweise Alkoxysilangruppen, wie die Trimethoxysilangruppe in Betracht. Bei dem Ring aus $R^4$ bzw. $R^5$ und Z handelt es sich vorzugsweise um den Pyrrolidin- oder den Piperidinring.

Bevorzugt enthalten die erfindungsgemäßen Pastenharze sowohl Gruppen (Ia) als auch (Ib) und besonders bevorzugt nur die Gruppen (Ia).

Die Urethangrüppierüngen (c) leiten sich in erster Linie von den weiter unten näher beschriebenen langkettigen Monoisocyanaten ($D_1$) ab, d.h. von Monoisocyanaten mit mindestens 8, in der Regel 8 bis 22 C-Atomen, vorzugsweise 10 bis 20 C-Atomen und insbesondere 12 bis 18 C-Atomen, die von Haus aus nur eine Isocyanatgruppe enthalten, und/oder von Poly(Di)isocyanaten mit einer freien Isocyanatgruppe, deren restliche Isocyanatgruppe(n) stabil verkappt ist (sind) (unter den Härtungsbedingungen also nicht entkappen) und deren Gesamt-C-Zahl im allgemeinen bei 10 bis 50, vorzugsweise 15 bis 50 und insbesondere 20 bis 40 liegt.

Daneben können die Pastenharze, insbesondere falls sie selbsthärtend sein sollen, noch andere Urethangrüppierüngen enthalten, die sich von gegebenenfalls kürzerkettigen, teilverkappten Poly-(Di)isocyanaten ($D_2$) ableiten, die unter den Härtungsbedingungen entkappen.

Unter "Urethangrüppierüng" ist hier die Gruppierung

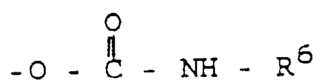

(II)

verstanden, in der $R^6$ einen Kohlenwasserstoffrest insbesondere aliphatischen oder araliphatischen Charakters, mit 6 bis 50, vorzugsweise 10 bis 40 und insbesondere 10 bis 30 C-Atomen, bedeutet, der gegebenenfalls durch Heteroatome (O, NH, NR) oder Gruppen wie

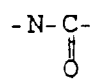

unterbrochen sein kann.

Im Falle der (teil)verkappten Polyisocyanate trägt $R^6$ noch ein bis fünf, vorzugsweise ein bis drei verkappte Isocyanatgruppen. Bei dieser Variante kann dann dieser Rest $R^6$ auch aromatisch sein und besitzt dann zumeist 6 bis 25, vorzugsweise 6 bis 15 C-Atome.

Diese Urethangrüppierüngen leiten sich von den weiter unten beschriebenen Isocyanaten (D1) und gegebenenfalls (D2) ab, wobei die Menge an (D1) und gegebenenfalls (D2) im allgemeinen 3 bis 50 Gew.-%, vorzugsweise 10 bis 45 Gew.-% und insbesondere 15-35 Gew.-%, bezogen auf das Pastenharz, beträgt.

Der Anteil von (D1) daran liegt bei mindestens 10 Mol %, vorzugsweise mindestens 20 Mol % und insbesondere 50 bis 100 Mol %.

Die Herstellung der erfindungsgemäßen Pastenharze kann in der Weise erfolgen, daß man zunächst Verbindungen (B), die mindestens eine 1,2-Epoxygruppe sowie OH-Gruppen enthalten mit langkettigen, monofunktionellen Isocyanaten (D1), gegebenenfalls in Abmischung mit teilverkappten Isocyanaten (D2), zur Reaktion bringt und dieses Reaktionsprodukt dann mit Aminen (A) unter Bedingungen, die zu quaternären Aminogruppen führen, umsetzt.

Alternativ kann zunächst die Anlagerung von (A) und (B) erfolgen, wobei (B) hier nicht zwingend OH-Gruppen zu enthalten braucht, worauf dieses Umsetzungsprodukt (C) dann mit den Isocyanaten (D1) und gegebenenfalls (D2) umgesetzt und anschließend daran die Quaternierung durchgeführt wird.

Als Amine (A), deren Gesamt-C-Zahl im allgemeinen 2 bis 21, vorzugsweise 3 bis 12 beträgt, kommen vorzugsweise solche der nachstehenden Formel (III) in Frage

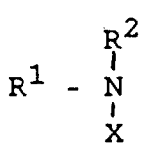

(III)

in der $R^1$ und $R^2$ die Bedeutung gemäß obiger Formel (Ia) haben und X vorzugsweise für $R^3$ (siehe gleichfalls Formel

(Ia)) oder für Wasserstoff steht. Im letzteren Falle, die Amine gemäß Formel (III) also sekundär sind, ist noch eine nachträgliche Quaternierung des Addukts aus (A) und (B) erforderlich.

Beispiele für die bevorzugt eingesetzten tertiären Amine sind (bei niedrigsiedenden Aminen ist dabei die Apparatur entsprechend drucksicher auszulegen):
Trimethylamin, Triethylamin, Tripropylamin, Tributylamin und höhere Homologe (linear, verzweigt oder cyclisch), N,N-Dimethylethanolamin, Triethanolamin, N-Methyldiethanolamin, N-methylpiperidin, N-Methylmorpholin, N-Benzylpiperidin, N-Phenylmorpholin, N-Methylpropylenimin, N-N-Dimethylaminoethoxyethanol.

Als sekundäre Amine seien hier genannt:
Dimethylamin, Diethylamin, Dipropylamin, Dibutylamin, etc.; Diisopropanolamin, Morpholin, Piperidin, bzw. geeignet substituierte Derivate davon.

Es können auch Gemische der tertiären oder sekundären Amine untereinander, sowie in Sonderfällen auch aus den tertiären und sekundären Aminen, verwendet werden.

In Mischung mit den Monoaminen der obigen Formel (III) oder weniger bevorzugt auch alleine können auch Polyamine Einsatz finden, die neben einer tertiären Aminogruppe noch mindestens eine sekundäre Aminogruppe enthalten. Weiterhin sind hier auch Polyamine möglich, die neben einer tertiären und/oder sekundären Aminogruppe noch mindestens eine primäre Aminogruppe aufweisen, die jedoch geblockt sein muß, z.B. als Ketimin. Diese Ketimine können im sauren Milieu in Gegenwart von Wasser deblockieren und auf diese Weise in Pastenharz härtungsreaktive Zentren ausbilden.

In Fällen, in denen die Anlagerung von (A) und (B) nicht über eine tertiäre Aminogruppe erfolgt, wird die Quaternierung nachträglich durchgeführt.

Geeignete Polyamine sind zum Beispiel: N,N-bisaminopropyl-N-methylamin, N,N-Dimethyl(diethyl)-propylamin, N,N-Dimethylaminoneopentanamin, sowie Oxa-Diamine wie 4-Oxaheptandiamin.

Falls Mischungen aus Monoaminen und Polyaminen verwendet werden, beträgt der Anteil von Monoaminen im allgemeinen 10 bis 90 %, vorzugsweise 50 bis 75 %, bezogen auf die Mischung.

Als Amine (A), die zu den Gruppen gemäß Formel (Ib) führen, kommen vorzugsweise solche in Frage, die Umsetzungsprodukte von prim./tert. und/oder sek./tert. Diaminen mit Epoxidverbindungen sind. Bei letzteren handelt es sich vorzugsweise um Monoepoxide. Beispiele für derartige Diamine sind N,N-Dimethylaminopropylamin, N,N-Diethylaminopropylamin, N,N,N′-Trimethylethylendiamin, N,N-Dimethylaminoneopentanamin, N,N-Diethyl-1,4-pentandiamin, 4-Dimethylaminopiperidin, 4-Dimethylamino-2,2,6,6-tetramethylpiperidin.
Beispiele für die hier bevorzugt eingesetzten Mono-Epoxidverbindungen sind: Ethylenoxid, Propylenoxid, Butenoxid und höhere acylische oder cyclische Homologe, wie z.B. Octadecen-1-oxid, Cyclopentenoxid, sowie Epoxidverbindungen mit weiteren Heteroatomen, wie z.B.: γ-Glycidyloxypropyltrimethoxysilan, Phenylglycidylether, Methylglycidylether, Stearylglycidylether, 2-Ethylhexylglycidylether, Phenol-$(EO)_5$-glycidylether, p-t-Butylphenylglycidylether, p-Octylphenylglycidylether und Lauryl-$(EO)_5$-glycidylether.

Als Verbindungen (B) können beliebige Materialien eingesetzt werden, sofern sie im Mittel mindestens eine, vorzugsweise zwei oder drei 1,2-Epoxydgruppe(n) pro Molekül enthalten und keine anderen funktionellen Gruppen aufweisen, welche die Reaktion mit der Komponente (A) stören. Das Molekulargewicht $\overline{M}_n$ (Zahlenmittel, bestimmt mit der Gelchromatographie, PS-Standard) sollte im allgemeinen zwischen 100 und 10000, vorzugsweise zwischen 150 und 3500 liegen und das Epoxid-Äquivalentgewicht zwischen 100 und 10000, vorzugsweise 150 und 1500. Die Epoxidgruppen sind vorzugsweise endständig, jedoch können in manchen Fällen auch Verbindungen als Komponente (B) eingesetzt werden, welche diese Gruppen in statistischer Verteilung über die Molekülkette enthalten und die durch Copolymerisation unter Verwendung von olefinisch ungesättigten, diese Epoxydgruppen enthaltenden Verbindungen hergestellt werden können.

Vorzugsweise besitzt die Komponente (B) die allgemeine Formel (IV)

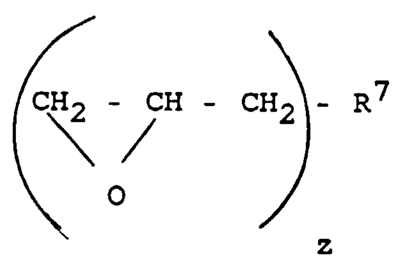

(IV)

in der bedeuten

$R^7$ = z-wertiger Rest eines Polyethers, Polyetherpolyols, Polyesters, Polyesterpolyols, der gegebenenfalls auch $(NR^8)$-Gruppen enthalten kann, wobei $R^8$ für Wasserstoff, Alkyl mit 1 bis 14, vorzugsweise 1 bis 8 C-Atomen oder Hydroxyalkyl mit 1 bis 14 , vorzugsweise 1 bis 8 C-Atomen steht, und diese Reste

im allgemeinen mittlere Molekulargewichte $\overline{M}_n$ von 200 bis 5000, vorzugsweise 200 bis 2000 aufweisen, oder einen z-wertigen Kohlenwasserstoffrest, vorzugsweise Alkylenrest mit 2 bis 18 C-Atomen, der gegebenenfalls inerte oder nichtstörende Gruppen tragen kann, oder einen z-wertigen Poly(sek.)aminrest oder den z-wertigen Rest eines Umsetzungsproduktes einer Epoxy-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten $\overline{M}_n$ von 800 bis 10 000, Polycarbonsäuren, hydroxy- oder aminofunktionellen Polytetrahydrofuranen oder von Umsetzungsprodukten von Polyaminen mit Glycidylestern von $\alpha,\alpha$-Dialkylalkanmonocarbonsäuren der Summenformel $C_{12-14}H_{22-26}O_3$ oder mit Versaticsäureglycidylester, wobei diese Umsetzungsprodukte im allgemeinen mittlere Molekulargewichte $\overline{M}_n$ von 300 bis 12000, vorzugsweise 400 bis 5000 aufweisen.

z = 1 bis 5

Der Index z steht in dieser Formel (IV) bevorzugt für 2 oder 3, insbesondere für 2.

Unter "Rest" im vorstehenden Sinne sei hier die jeweilige Verbindung (z.B. Polyether) abzüglich der aktiven H-Atome derjenigen Gruppen verstanden, die an die $CH_2$-Gruppe in Formel (IV) angrenzen.

Insbesondere handelt es sich bei diesen Verbindungen (B) um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren), die man in bekannter Weise durch Umsetzung der jeweiligen Polyole mit Epichlorhydrin erhält.

Als mehrwertige Phenole sind hier beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4′-Dihydroxydiphenylcyclohexan, 4,4′-Dihydroxy-3,3′-dimethyldiphenylpropan, 4,4′-Dihydroxydiphenyl, 4,4′-Dihydroxybenzophenon, Bis-(4-hydroxyphenyl)-1,1-äthan, Bis-(4-hydroxyphenyl)-1,1′-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-1,1′-ether. Bisphenol A ist hierbei bevorzugt. Vorzugsweise sind zusätzlich freie Hydroxylgruppen zu den Epoxydgruppen im Polyglycidylether des Polyphenols enthalten. Auch Diglycidyladdukte von (cyclischen) Harnstoffen sind hierfür einsetzbar.

Auch die Polyglycidyläther von mehrwertigen Alkoholen sind geeignet. Als Beispiele derartiger mehrwertiger Alkohole seien Äthylenglykol, Diäthylenglykol, Triäthylenglykol, 1,2-Propylenglykol, Polyoxypropylenglykole (n = 1-10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Falls Epoxidverbindungen von Hause aus keine OH-Gruppen enthalten oder nur ein niedriges Molekulargewicht aufweisen oder falls eine Modifizierung zum Zwecke einer Flexibilisierung zweckmäßig ist, so kann hier beispielsweise durch einen Umsatz derartiger Epoxidverbindungen, die für diesen Zweck mindestens 2 Epoxidgruppen enthalten müssen, mit geeigneten difunktionellen Verbindungen Abhilfe geschaffen werden. Als solche difunktionellen Verbindungen kommen z.B. Diamine, auch in Form von Amin-Epoxid-Addukten mit endständigen Aminogruppen, aliphatische oder aromatische Diole (beispielsweise die weiter oben genannten), Polymere, wie Polyester, Polyether, Polyetherpolyester mit endständigen OH-Gruppen, sowie Dicarbonsäuren udgl. in Betracht. Die Umsetzung ist dabei so durchzuführen, daß das resultierende Umsetzungsprodukt mindestens eine, vorzugsweise zwei oder drei Epoxygruppe(n) enthält.

Eine ausführliche Aufzählung der geeigneten Epoxidverbindungen findet sich in dem Handbuch "Epoxidverbindung und Epoxidharze" von A.M. Paquin, Springer Verlag, Berlin 1958, Kapitel IV und in Lee, Neville "Handbook of Epoxy Resins", 1967, Chapter 2. Es können auch Mischungen von mehreren Epoxidverbindungen verwendet werden.

Die bevorzugt eingesetzten, OH-Gruppen enthaltenden Verbindungen (B) werden vorzugsweise bereits vor der Reaktion mit den Aminen (A) mit den Isocyanaten (D1)/(D2) umgesetzt, wobei entweder nur ein Teil oder alle OH-Gruppen zur Reaktion gebracht werden. Alternativ ist es bei OH-Gruppen enthaltenden Verbindungen (B) auch möglich, erst das Umsetzungsprodukt (C) mit diesen Isocyanaten umzusetzen. Falls die Verbindungen (B) keine OH-Gruppen enthalten, sich diese vielmehr erst bei der Addition der Amine (A) bilden, kommt nur diese Alternative in Betracht.

Die Umsetzung der Verbindung (B) mit den Isocyanaten ($D_1/D_2$) geschieht unter den für derartige Reaktionen üblichen Bedingungen bei zweckmäßigerweise 30 bis 80°C und in Gegenwart inerter, vorzugsweise aprotischer Lösungsmittel. Bei Erreichen eines % NCO-Gehaltes von < 0,2 wird die Reaktion abgebrochen. Der Reaktionsmischung können auch Katalysatoren, wie für die Urethanbildung üblich, zugesetzt werden. Als solche seien hier insbesondere Metallsalze und -chelate, zum Beispiel Bleiacetat, Dibutylzinndilaurat, Zinnoctoat und ähnliche genannt; auch basische Katalysatoren wie tertiäre Amine sind hierfür geeignet.

Als Lösungsmittel für die obige Umsetzung kommen vorzugsweise aprotische und gegebenenfalls polare Lösungsmittel in Frage. Beispielsweise seien hier erwähnt: halogenierte Kohlenwasserstoffe (weniger geeignet bei Einsatz als

Tauchlack), N-Methylpyrrolidon, Ether wie Diethylether, 1,2-Dimethoxyethan, Tetrahydrofuran oder Dioxan; Ketone wie beispielsweise Aceton, Methylethylketon, Methylisopropylketon, Methylisobutylketon, Cyclohexanon und ähnliche; Ester (weniger geeignet bei Einsatz als Tauchlack), wie Butylacetat, Ethylglykolacetat, Methoxypropylacetat; (cyclo) aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180°C (höhersiedende Mineralölfraktionen, wie ®Solvesso). Die Lösemittel können dabei einzeln oder im Gemisch eingesetzt werden.

Die langkettigen Monoisocyanate ($D_1$), die den erfindungsgemäßen Verbindungen neben einer gewissen Flexibilität vor allem ein ausreichendes Maß an lyophilem Charakter verleihen sollen, besitzen mindestens 8 C-Atome, vorzugsweise 8 bis 22 C-Atome und insbesondere 12 bis 18 C-Atome; ihr Kohlenwasserstoffrest besitzt vorzugsweise aliphatischen oder araliphatischen Charakter. Beispiele hierfür sind Octadecylisocyanat, Dodecylisocyanat, Nonylphenylisocyanat etc.

Weniger bevorzugt kommen hierfür auch teilverkappte, noch eine freie NCO-Gruppe aufweisende Polyisocyanate mit einer Gesamt-C-Zahl von mindestens 10, vorzugsweise 15 bis 50 und insbesondere 20 bis 40 in Frage, die gegebenenfalls auch in Mischung mit obigen Monoisocyanaten eingesetzt werden können. Als Polyisocyanate, vorzugsweise Diisocyanate, können beispielsweise die nachstehend bei ($D_2$) aufgeführten Verwendung finden. Zur Verkappung sind entsprechend längerkettige Verbindungen geeignet, die bei der Härtung des Lackfilms unten der erfindungsgemäßen Bedingungen praktisch nicht abgespalten werden. Die so teilverkappten Isocyanate verleihen den Pastenharzen also praktisch keine selbsthärtenden Eigenschaften. Beispiele für derartige Verkappungsmittel sind:
Fettamine, wie Talgfettamin, Octadecylamin oder Dodecylamin, Nonylamin, Isononyloxypropylamin oder entsprechend abgeleitete Alkohole, zum Beispiel Octadecylalkohol, Decanol und ähnliche.

Falls die erfindungsgemäßen Bindemittel selbsthärtend sein sollen, können auch teilverkappte Isocyanate ($D_2$) eingeführt werden, die auch kürzerkettig sein können und unter den Einbrennbedingungen entkappen. Hierfür geeignete Polyisocyanate sind beliebige, auf dem Polyurethan- bzw. Lackgebiet bekannte Polyisocyanate, beispielsweise aliphatische, cycloaliphatische oder aromatische Polyisocyanate.

Typische Beispiele für die derartige Polyisocyanate sind: Xylylendiisocyanat, Diphenylmethan-4,4-diisocyanat, Triphenylmethyl-4,4′-triisocyanat, Triphenylmethantriisocyanat, Polyphenylpolymethylisocyanat, 2,2,4(2,4,4)-Methylcyclohexyldiisocyanat, Dicyclohexylmethyldiisocyanat, Diethylfumarhexylisocyanat, Bis-(3-Methyl-4-isocyanatocyclohexyl)-methan, 2,2-Bis-(4-isocyanatocyclohexyl)-propan, der Methylester des Lysindiisocyanats, das Biuret des Hexamethylendiisocyanats, Diisocyanate dimerer Säuren, 1-Methyl-benzol-2,4,5-triisocyanat, Bisphenyl-2,4,4′-triisocyanat, das Triisocyanat aus 3 Mol Hexamethylendiisocyanat und 1 Mol Wasser mit 16 % NCO-Gehalt und weitere, wenigstens zwei NCO-Gruppen pro Molekül enthaltende Verbindungen, vorzugsweise Isophorondiisocyanat, Hexamethylendiisocyanat sowie Tri- und Tetramethylhexamethylendiisocyanat, insbesondere aber 2,4- oder 2,6-Tolylendiisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen enthaltenden Präpolymere, wie sie insbesondere durch Umsetzung der oben genannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind. Bevorzugt werden die Präpolymeren allerdings als externe Härterkomponente bei den fremdvernetzenden Systemen eingesetzt.

Die Verkappungsmittel sollen so beschaffen sein, daß sie bereits unter den bevorzugten Härtungstemperaturen von 130 bis 180°C, gegebenenfalls in Gegenwart der hierfür bekannten Katalysatoren, wieder abspalten.

Beispiele für derartige Verkappungsmittel sind: aliphatische, cycloaliphatische oder alkylaromatische (einwertige) Alkohole, zum Beispiel niedere aliphatische Alkohole wie Methyl-, Ethylalkohol, die verschiedenen Propyl-, Butyl- und Hexylalkohole, Heptyl- Octyl-, Nonyl-, Decyl-, Propargyl-, Decylalkohol und ähnliche; Methoxy (1-bzw. 2-)propanol; ferner ungesättigte Alkohole wie Allylalkohole, cycloaliphatische Alkohole wie Cyclopentanol, Cyclohexanol, alkylaromatische Alkohole wie Benzylalkohol, Methyl- sowie p-Methoxy- und p-Nitrobenzylalkohol und Monoäther von Glykolen, wie Ethylen-glykolmonoethyläther, -monobutyläther und ähnliche. Weitere Verkappungsmittel sind Ketoxime, zweckmäßigerweise mit 3 bis 20 C-Atomen, vorzugsweise 3 bis 10 C-Atomen, wie Acetonoxim, Methyl-ethylketonoxim (= Butanonoxim), Hexanonoxim (wie Methyl-Butylketonoxim), Heptanonoxim (wie Methyl-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diethylethanolamin und spezielle Amine, wie Dibutylamin. Bevorzugt sind hierbei 2-Ethylhexanol, Butyldiglykol, Butylglykol, 3-Methyl-3-methoxybutanol, Pyridinylcarbinol.

Beispiele für geeignete Entkappungs-Katalysatoren sind Beeioctoat, Bleisilikat, Bleinaphthenat, Zinkverbindungen gemäß den DE-Offenlegungsschriften 28 07 698 und 33 06 064, Zink- und Zink-Blei-Verbindungen der Nitrophthalsäure, Komplexverbindungen aus Zinkoxid und 8-Hydroxychinolin (auch "in situ" anwendbar), Antimonotrioxid, Mangan

(II und III)acetylacetonat, Manganphosphat, Mangan-Zinkphosphate, Kobaltnaphthenat, Cadmium-acetyl-acetonat, Thalliumdicyclopentadien, Triethanolamin-titanat oder organische Verbindungen des Zinns, zum Beispiel Dibutylzinndilaurat und bevorzugt Dibutylzinnoxid.

Die Umsetzung von Amin (A) mit der vorzugsweise bereits mit den Isocyanaten (D1)/(D2) umgesetzten Epoxidverbindung (B) zu den quaternären Pastenharzen der Erfindung erfolgt im allgemeinen bei Temperaturen von 20 bis 100°C, vorzugsweise 50 bis 100°C und insbesondere 70-90°C in Gegenwart von wasserhaltigen und vorzugsweise organischen Säuren. Dabei ist die Anwesenheit eines organischen Lösungsmittels zumeist von Vorteil. (A) und (B) werden im allgemeinen in solchen Mengen eingesetzt, daß das Equivalentverhältnis von mit Epoxygruppen reaktiven Aminogruppen zu Epoxygruppen 0,7 bis 1,5 zu 1, vorzugsweise 0,8 bis 1,3 zu 1 und insbesondere 0,9 bis 1,1 zu 1 beträgt.

Die eingesetzten Säuren besitzen dabei im allgemeinen einen $pK_a$-Wert von ≤ 6 und sind zweckmässigerweise gut Wasser mischbar. Beispiele hierfür sind anorganische Säuren wie Phosphorsäure; bevorzugt handelt es sich hierbei jedoch um organische Säuren, wie Ameisensäure, Essigsäure und besonders bevorzugt Milchsäure. Es ist beispielsweise auch möglich, die Umsetzung von (A) mit (B) zunächst im Neutralen durchzuführen und erst anschließend die Säure zuzufügen.

Als Lösemittel eignen sich grundsätzlich die weiter oben für die Umsetzung von (B) mit (D1)/(D2) beschriebenen aprotischen und polaren Systeme. Bevorzugt sind die hier verwendeten Lösungsmittel jedoch protisch; hierzu gehören u.a. Butylglykol, Butyldiglykol, Methoxypropanol, Ethoxypropanol. Die Menge an organischem Lösemittel in der Quaternisierungsmischung richtet sich nach Amin (A) und Wassermenge und soll so bemessen sein, daß die Mischung homogen ist.

In einer bevorzugten Ausführungsform des erfindungsgemäßen Verfahrens wird beispielsweise zu dem Umsetzungsprodukt aus der Epoxydverbindung (B) und den Isocyanaten (D1)/(D2) eine Mischung aus Amin (A) (1 Mol pro Mol Epoxidgruppe), 1 Mol Milchsäure/Mol tertiärem Amin und 0,5 bis 20, vorzugsweise 2 bis 10 Mol E-Wasser pro tertiärem Amin und dem organischen Lösungsmittel zugegeben. Die Reaktion wird bis zu einer Säurezahl von < 10 geführt. Gegebenenfalls kann dabei auch mit einem Überschuß an Amin gearbeitet werden, der nach der Quaternierung abdestilliert wird (bis zu 1,5 Mol Amin/Mol Epoxidgruppe).

Für den Fall, daß als Amine (A) Amine mit sekundären oder primären Aminogruppen eingesetzt werden, wird das mit (B) resultierende Umsetzungsprodukt vorzugsweise anschließend noch in einem Extraschritt quaterniert. Bei Verwendung eines Unterschusses an Amin (A) kann diese Quaternierung auch durch die überschüssige Epoxidverbindung (B) erfolgen; hierbei besteht jedoch die Gefahr der Gelierung, so daß dieser Weg weniger vorteilhaft ist.

Für die Quaternierung durch ein gesondertes Quaternierungsmittel können grundsätzlich alle bekannten Methoden eingesetzt werden, wie sie beispielsweise in der DE-Offenlegungsschrift 26 41 286 beschrieben sind. Durch die Art des eingeführten Gegenions können sich jedoch hierbei Beschränkungen ergeben. So können Quaternierungsverfahren für erfindungsgemäße Pastenharze, die bei Elektrotauchlacken verwendet werden sollen, dann nicht eingesetzt werden, wenn sie Halogenanionen einführen, da diese zu starker Anodenkorrosion führen. Dies ist beispielsweise bei der Quaternierung mit Alkylhalogeniden (jodiden), nicht jedoch mit Dialkylsulfaten oder Trialkylphosphaten der Fall.

Bevorzugt erfolgt diese Quaternierung durch Umsetzung von (C) mit Monoepoxid-Verbindungen, wie z.B. Ethylenoxid, Propylenoxid, 2-Ethylhexylglycidylether, Versaticsäureglycidylester, Glycidyl-Phthalimid, Phenyl-Glycidylether, Methylglycidylether, Phenol-$(EQ)_5$-Glycidylether unter den weiter oben beschriebenen Bedingungen bei Temperaturen von vorzugsweise 40 bis 90°C (vgl. hierzu auch Houben-Weyl, Bd. XI/2, S. 609 ff (1958)).

Im Falle leicht flüchtiger Epoxidverbindungen wird zuerst mit dem Gemisch aus Milchsäure, Wasser und Lösungsmittel versetzt und anschließend unter gelegentlichem Kühlen die Epoxidverbindung (Ethylenoxid, Propylenoxid etc.) eingeleitet (drucksichere Apparatur).

Die so quaternierten Verbindungen eignen sich ausgezeichnet als Pastenharze für Pigmentpasten bzw. Pigmentdispersionen, wobei -je nach Art des Pigmentes, dessen Primärkorngröße etc.- Pigment: Pastenharz-Verhältnisse von 1:1 bis 40:1, vorzugsweise 12:1 bis 20:1 möglich sind. Neben dem erfindungsgemäßen Pastenharz und dem Pigment kann diese Pigmentpaste noch die üblichen Additive, wie Füllstoffe, sonstige lacktübliche Hilfsstoffe (Dipergierhilfsmittel, Netzmittel, Lösemittel, Weichmacher, Entschäumer etc.) sowie gegebenenfalls einen Teil oder die Gesamtmenge der bekannten Härtungskatalysatoren enthalten.

Als Pigmente kommen die hierfür üblichen in Frage, wie zum Beispiel: Titanoxid (in der Regel als Hauptbestandteil), andere Weißpigmente bzw. Extender, wie Antimonoxid, Zinkoxid, basisches Blei-Carbonat bzw. -Silicat und/oder -Sulfat, Bariumcarbonat, Ton, Calciumcarbonat, Aluminiumsilicat, Kieselerde, Magnesium-Carbonat- und/oder -Silicat; außerdem (zusätzliche) Farbpigmente wie Phthaloxyaninblau, hydratisierte Eisenoxide, Chromgelb, Ruß, Toluidinrot, Braunstein.

Der Wassergehalt solcher Pigment-Pasten richtet sich nach der für die Verarbeitung gewünschten Viskosität und liegt vorzugsweise zwischen 10 und 70 %.

Gegebenenfalls kann die Pigment-Paste auch vor dem Einsatz weiter verdünnt werden. Der Festkörpergehalt (125°C/1 h) derartiger Pigment-Pasten wird im allgemeinen auf 50 bis 90, vorzugsweise 60 bis 85 Gew.-%, eingestellt.

Die Herstellung derartiger Pigment-Pasten erfolgt in bekannter Weise, wie etwa in der DE-A- 37 26 497 oder in der DE-A- 26 34 229 beschrieben.

Die Zerkleinerung des Pigmentes geschieht in der Regel in Kugelmühlen, Sandmühlen, Cowles-Auflösern oder kontinuierlichen Zerreibungseinrichtungen, bis das Pigment auf die gewünschte Teilchengröße zerkleinert worden und durch das Trägerharz benetzt oder in ihm dispergiert worden ist. Nach der Zerkleinerung sollte die Teilchengröße des Pigments im Bereich von 10 Micrometer oder kleiner, vorzugsweise so klein wie möglich sein. Im allgemeinen wird das Pigment auf eine Feinheit von kleiner 3 µm (gemessen mit Laser-Aerosolspektroskopie) zerkleinert, vorzugsweise in Gegenwart von Glas-Perlen, $Al_2O_3$-(Korund)-Perlen oder Keramik- bzw. $ZrO_2$-Perlen (Ø 0.5 - 3 mm).

Vorstehende Pigment-Dispersionen (-Pasten) werden dann in üblicher Weise und ausreichender Menge dem wasserverdünnbaren Lack, insbesondere Elektrotauchlack, zugemischt. Im allgemeinen hat die fertige, elektrisch abscheidbare Zusammensetzung ein Verhältnis von Pigment zu Bindemittel (=elektrisch abscheidbares Harz plus Pastenharz) von 0,05:1 bis 0,8:1.

Als filmbildende Harze in diesen Lacken kommen die hierfür bekannten Produkte in Frage, wie sie beispielsweise in den DE-A- 36 44 371, 37 26 497 und 38 09 695 sowie in der EP-Offenlegungsschrift 234 395 beschrieben sind. Weitere hierfür geeignete Harze sind im Journal of Coatings Technology, Vol. 54, No. 686, (1982), S. 33 bis 41 ("Polymer Compositions for Cationic Electodepositable Coatings") offenbart, worauf gleichfalls Bezug genommen wird.

Die elektrische Ablagerung der Lackteilchen aus den Elektrotauchlacken erfolgt nach bekannten Verfahren, auf die hier verwiesen wird. Die Abscheidung kann auf allen elektrisch leitenden Substraten erfolgen, z.B. Metall wie Stahl, Kupfer, Aluminium und dergleichen.

Nach der Abscheidung wird der Überzug bei erhöhten Temperaturen, die im allgemeinen von der Beschaffenheit der Härterkomponente abhängig sind, durch übliche Verfahren gehärtet, wobei Temperaturen von 100 bis 220°C, vorzugsweise 130 bis 180°C verwendet werden.

Die erhaltenen Überzüge zeichnen sich insbesondere durch hervorragende Salzsprühbelastbarkeit (ASTM-B-117-64; 960 Stunden auf zinkphosphatiertem und blankem Eisenblech) aus. Die erfindungsgemäßen Pastenharze liefern beim Einbrennen aufgrund der Umwandlung von quaternärer Ammoniumstruktur in tertiäres Amin keine Spaltprodukte, die zum Kettenabbruch führen. Mit dieser Umwandlung ist auch eine Veringerung der Polarität des Lackfilms und damit eine Erhöhung der Wasserbeständigkeit verbunden.

**Beispiele:**

Alle Mengenangaben sind in Gewichtsteilen.

Der Siebrückstand und die "L-Blechbeschichtung" wurden folgendermaßen bestimmt bzw. durchgeführt:

Siebrückstand:

1 l der verdünnten Lacklösung wird durch ein gewogenes Perlonsieb (Maschenweite 30 µm) gegossen. Das Sieb wird mit deionisiertem Wasser nachgespült und nach Trocknung (1 h/125 °C) gewogen. Das Ergebnis wird in mg Rückstand angegeben (auf 1000 ml Bad bezogen).

"L-Blech-Beschichtung"

Ein zinkphosphatiertes Stahlblech (zirka 10 x 20 cm) wird am unteren Ende rechtwinklig gebogen (3 cm waagrechte Fläche). Das Blech wird im Beschichtungsbad so eingehängt, daß der waagrechte Schenkel des L etwa 15 cm unter der Oberfläche des Lackbades ist. Die Beschichtung erfolgt bei abgestellter Rührung und mit einer Beschichtungsdauer von 4 min. Nach Ende der Beschichtung verbleibt das Blech noch 2 min. im Bad. Anschließend wird das Blech aus dem Bad genommen, nach weiteren 2 min. mit Wasser gespült und eingebrannt. Das Blech wird visuell hinsichtlich Verlauf, Glanz und Sedimentationserscheinungen beurteilt.

**I. Herstellung des erfindungsgemäßen Pastenharzes:**

A) Pastenharz mit Gruppe (Ia)

1. 960 T (2 Äquiv. Epoxid) von Epikote® 1001 wurden in 388 T N-Methylpyrrolidon gelöst und auf 80°C erwärmt. Zu dieser gut homogenisierten Mischung wurden während einer Stunde 590 T (2 Äquiv. NCO) Octadecylisocyanat einlaufen gelassen. Nach weiteren 3 Stunden war der % NCO-Wert auf praktisch 0 gefallen. Die Produktlösung war ca. 80 %ig (1 h, 125°C) und hatte eine Epoxidzahl von ca. 2,1.

2. Zu 36 T E-Wasser und 200 T Milchsäure (90 %ig) wurden unter Kühlen 118 T (2 Mol) Triethylamin einlaufen

gelassen. Anschließend wurde die Lösung mit 20 T Butylglykol versetzt.

3. Zu der unter I. 1. erhaltenen Reaktionsmischung wurde bei 50°C die unter I. 2. erhaltene Quaternierungsmischung einlaufen gelassen. Dabei stieg die Temperatur auf 70°C. Anschließend wurde die Reaktionsmischung für 5 Stunden auf dieser Temperatur gehalten (Säurezahl praktisch 0), dann mit Butylglykol auf 75 % Festkörper (1 h, 125°C ≙ 152 T Butylglykol) eingestellt und mit E-Wasser auf 40 % verdünnt. Das erhaltene Pastenharz war unbegrenzt wassermischbar.

B) Pastenharz mit Gruppe (Ib)

Beispiel A) wurde wiederholt, mit dem Unterschied, daß in der Stufe A)3 die nachfolgend beschriebene Quaternierungsmischung eingesetzt wurde:

Zu einer Lösung von 1 mol (102 T) N,N-Dimethylaminopropylamin in 637 T Methoxypropanol wurden bei 60-80°C während einer Stunde 854 T (2 mol) ®Denacol Ex 145 (Phenol-$(EO)_5$-glycidylether) einlaufen gelassen und anschließend bei 80-100°C gehalten, bis eine Epoxyzahl von praktisch 0 erreicht wurde (Aminzahl ca. 117 mg KOH/g Feststoff); ca. 60 %ig.

Zu 36 T E-Wasser und 200 T Milchsäure (90 %ig) wurden unter Kühlen 3187 T (~ 2 mol) vorstehender Aminlösung einlaufen gelassen und anschließend mit Butylglycol (ca. 64 T) auf 60 % verdünnt.

**II. Vergleichsversuch:**

Fur den Vergleichsversuch wurde ein Pigmentpastenharz, welches in seinem Aufbau in der EP-Offenlegungsschrift 107 098 (Beispiel II) beschrieben ist, synthetisiert.

Zu 420 T (2 Äquiv.) Kokosfettsäure wurden bei Raumtemperatur während einer 1/2 Stunde 235 T (2,3 Äquiv.) Dimethylaminopropylamin einlaufen gelassen. Dabei stieg die Temperatur auf ca. 70°C an. Die Reaktionsmischung wurde anschließend bei 135 bis 140°C für ca. 2 Stunden Rückfluß gekocht.

Danach wurde über einen Wasserabscheider Reaktionswasser abdestilliert und im Anschluß daran im Vakuum von überschüssigem Amin befreit. Das Reaktionsprodukt wurde auf Raumtemperatur abgekühlt, mit 237 T Butylglykol verdünnt, gut homogenisiert, dann mit 218 T Milchsäure (90 %ig, 2,18 Äquiv.f) versetzt. Dabei stieg die Temperatur auf ca. 60°C an und wurde dort für ca. 15 min. gehalten. Anschließend wurde mit 208 T vollentsalztem Wasser versetzt, bei 60°C für 15 min gut homogenisiert und dann wurden rasch 439 T (2,34 Äquiv.) Epikote 828 zugegeben. Die Reaktionsmischung wurde dann auf 75 bis 85°C erwärmt und für 2 Stunden bei dieser Temperatur gehalten. Das Produkt hatte eine Säurezahl von ca. 10 mg KOH/g Festharz und einen Festkörpergehalt (1 h, 125°C) von ca. 62 %. Das Bindemittel war unbegrenzt wassermischbar.

**III. Bereitung der Bindemittel-Dispersionen (KTL-Lacke)**

1. Herstellung von teilverkappten Polyisocyanaten:

Zu 174 T Toluylendiisocyanat (2 Äquiv. NCO; 80 % 2,4-, 20 % 2,6-Isomeres) wurden bei 25 bis 40°C in Gegenwart von 0,01 % Triethylamin als Katalysator 124 T (1,05 Äquiv. OH) Butylglykol langsam einlaufen gelassen und bis zu einem NCO-Wert von ca. 13,5 - 14,0 % umgesetzt.

2. Herstellung des Härters (analog DE-A- 38 09 695)

Zu 129,3 T (0,55 Mol) $DETA(EO)_3$ ($DETA(EO)_3$ = dreifach ethoxyliertes Diethylentriamin wie in vorstehender Patentanmeldung beschrieben) in 116,80 T N-Methylpyrrolidon wurden während 30 min. bei 60°C 102,3 T (0,55 Mol) ®Beckopox-080 (2-Ethylhexylglycidylether) zugegeben. Die Temperatur steig bis 80°C an, und die Reaktionsmischung wurde dann bis zum Erreichen einer Epoxidzahl von 0 bei 100°C gehalten (3 Stunden). Anschließend wurde mit 440 T Toluol verdünnt und auf 60°C gekühlt. In diese Mischung wurden dann während 30 min. 819,5 T (2,75 Mol) des teilverkappten Polyisocyanats gemäß 1.1.) einlaufen gelassen und anschließend während 4 Stunden bei 70°C bis zu einem % NCO-Wert von 0,15 umgesetzt.

Die Aminzahl des erhaltenen Härters lag bei ca. 57,5 mg KOH/g. Festkörper (1 h, 125°C): ~ 65 %.

**3. Herstellung der Bindemittel**

3.1. In Anlehnung an Beispiel VIII/26 der DE-Offenlegungsschrift 36 24 454 wurde eine Bindemittellösung folgendermaßen hergestellt:

832 T des Monocarbonates von ®Epicote 828 (Diglycidylether von Bisphenol A; 2 Äquiv. Epoxid), 830 T ®Capa 205 (= Polycaprolactondiol mit mittl. Molmasse von 830) und 712 T Toluol wurden gemischt und bei 70 bis 140°C in Gegenwart von ca. 0,3 % Bortrifluoridetherat zur Reaktion gebracht bis eine Epoxidzahl von ca. 0 erreicht wurde. Anschließend wurden 1497 T des Biscarbonates von ®Epicote 1001 (2 Äquiv. Carbonat, 70 %ig in Toluol als Suspension) zugesetzt, gut homogenisiert und bei 60 bis 80°C während 2 Stunden 1192 T der Verbindung gemäß diesem Beispiel I. 1. einlaufen gelassen. Anschließend wurde bis zum Erreichen von ca. 0 % NCO auf 80°C gehalten.

Die Reaktionsmischung wurde dann auf ca. 40°C gekühlt, mit 645 T Bishexamethylentriamin versetzt und bei 30 bis 40°C während 2 bis 3 Stunden nochmals 596 T der Verbindung I. 1. zugegeben und anschließend bei 40°C bis zu einem % NCO-Wert von 0,1 % abreagieren gelassen.

Die so erhaltene Bindemittelmischung wurde mit 1490 T Methoxypropanol auf 66 % Festkörper eingestellt, auf ca. 70°C erwärmt und bis zum Erreichen einer Aminzahl von ca. 33 (bezogen auf Bindemittel fest) gehalten. Anschließend wurde mit 142 T Ameisensäure (50 %ig) auf einen MEQ-Wert von ca. 30 teilneutralisiert (Festkörper 65 %ig, 1 Stunde, 125°C).

3.2. Analog der EP-Offenlegungsschrift 12463 und der DE-Offenlegungsschrift 36 15810 wurden:

301 T Diethanolamin, 189 T N-N-Dimethylaminopropylamin und 1147 T eines Adduktes aus 2 Mol 2-Methylpentamethylendiamin und 4 Mol Glycidylester der Versaticsäure (Cardura® E 10 von Shell) zu 5273 T Bisphenol-A-Epoxidharz (Epoxidäquivalentgewicht 475) in 3000 T Ethoxypropanol gegeben. Das Reaktionsgemisch wurde 4 Stunden unter Rühren bei 60 bis 90°C und dann eine Stunde bei 120°C gehalten.

Anschließend wurde mit Ethoxypropanol auf 65 % Festkörper verdünnt (~ 720 g).

| | |
|---|---|
| Hydroxylzahl | : 276 mg KOH/g Festharz |
| Hydroxylzahl (primäres OH) | : 55 mg KOH/g Festharz |
| Hydrierjodzahl | : praktisch Null |
| Aminzahl (tertiäre Aminogruppen) | : 78 mg KOH/g Festharz |

4. Herstellung der Lacke

Gemäß nachstehender Rezeptur wurden aus den in II. 3. beschriebenen Bindemitteln folgende Dispersionen erstellt (40 %ig; 1 h 125°C):

Tabelle 3:

| Dispersion I | Dispersion II |
|---|---|
| 588 T Bindemittel 3.1. (65 %ig in Toluol/Methoxypropanol) | 1032 T Bindemittel 3.2. (65 %ig in Ethoxypropanol) |
| 588 T Bindemittel 3.2. (65 %ig in Ethoxypropanol) | |
| 363 T Härter 2. (65 %ig in NMP/Toluol) | 506 T Härter 2. (65 %ig in NMP/Toluol) |
| 20 T Butyldiglykol | 20 T Butyldiglykol |
| 17,06 T Ameisensäure, 50 %ig | 32,2 T Ameisensäure, 50 %ig, |
| 1381 T E-Wasser | 1389 T E-Wasser |

Die Bindemittel, der Härter, das Butyldiglykol und die Ameisensäure wurden vorgelegt, gut homogenisiert und dann durch Vakuumdestillation bei Temperaturen von 40 bis 80°C (Manteltemperatur) und Drucken bis minimal 0,02 bar in 50 min. 457 g (I) bzw. 463 g (II) Lösemittel abgezogen. Um ein Schäumen zu vermeiden, wurde dabei der Druck nur entsprechend langsam vermindert.

Nach Abschluß der Destillation wurde belüftet und mit 60°C warmen E-Wasser auf 40 Gew.-% Festkörpergehalt

(bestimmt bei 125°C/1 h) unter gutem Rühren dispergiert. Die so erhaltenen dünnflüssigen Dispersionen wurden bei 40°C über einen 25 µm GAF-Filter filtriert. Die MEQ-Werte lagen bei ca. 30 (I) bzw. 35 (II).

**IV. Prüfung erfindungsgemäß hergestellten Bindemittel als Pigmentpastenharze**

a) Aus dem Pastenharz entsprechend dem Beispiel I. A) 3. und dem Vergleichsversuch II wurden gemäß der nachstehenden Formulierung Pigmentpasten nach üblichen Standardprüfrezepturen hergestellt: Pigmentzusammensetzung (inkl. Additive):

| A | | B |
|---|---|---|
| 3,550 | a) ®Surfynol 104/50 %ig in Butylglykol | 3,550 |
| 10,542 | b)basische Bleisilikatpaste/ 75 %ig in E-Wasser (EP 202) | 10,542 |
| 1,692 | c) ®Printex 25 (Farbruß) | 1,480 |
| 5,086 | Dibutylzinnoxid | 14,834 |
| 79,130 | d) Titanoxid RSE 50 | 69,594 |
| 100,000 | | 100,000 |

a) Air Products and Chemicals Inc.
b) Fa. Heubach
c) Fa. Degussa AG
d) Fa. Bayer AG

Pigmentpaste :

| Beispiel | Pastenharz gemäß | Pigmentzusammensetzung | PBV | Festkörper (1 h, 125°C) |
|---|---|---|---|---|
| IV. 1. | IA) 3. | A | 12:1 | 80 % |
| IV. 2. | IA) 3. | B | 18:1 | 70 % |
| IV. 3. | II. (Vergl.) | A | 12:1 | 80 % |
| IV. 4. | II. (Vergl.) | B | 35:1 | 70 % |

Die Pastenharze wurden gemäß obiger Rezeptur, in der dem Fachmann bekannten Art und Weise auf einer Perlenmühle (s. a. DE- A-37 26 497) angerieben und anschließend mit E-Wasser auf Festkörper eingestellt, um eine entsprechende Handbarkeit zu gewährleisten.
Alle Pasten besaßen praktisch kein Thixotropierverhalten und hatten Viskositäten bei D = 50 $s^{-1}$ von 300 bis 450 mPa.s und bei D = 100 $s^{-1}$ von 150 bis 250 mPa.s. Die Pasten zeigten auch bei Lagerung (4 Wochen, Raumtemperatur) keine nennenswerte Viskositätsveränderung bzw. Pigmentantrocknungen.

b) Die Pasten wurden dann einem verdünnten Klarlack (20 %ige wäßrige Lösung), der unter III. 3. beschriebenen K-ETL-Bindemittel-Dispersionen unter Rühren zugesetzt und anschließend mit E-Wasser auf 18 % Festkörper (1 h, 125°C) eingestellt. Anschließend wurde nach 24 Stunden, 14 Tagen und 4 Wochen (Rühren bei Raumtemperatur) der Siebrückstand bestimmt und eine "L-Blech-Beschichtung" durchgeführt.

Die Prüfkombination 1 bis 8 wurde der kataphoretischen Abscheidung in einem offenen Glasgefäß unterworfen. Als Kathode dienten die angeführten Untergründe und als Anode, im Abstand von 5 bis 10 cm von der Kathode, blankes Stahlblech. Die Badtemperatur lag bei 28°C, die Abscheidedauer betrug 2 min.

Die Oberflächenbeurteilungen erfolgten an den gehärteten Filmen (Einbrennbedingungen: 20 min, Objekttemperatur von 180°C) mit einer Sollschichtstärke von 20 µm auf B. 1. Die Ergebnisse sind in der nachstehenden Tabelle 4 zusammengefaßt:

Die Abkürzungen in der Tabelle haben folgende Bedeutung:

| | |
|---|---|
| i. O. | Beschichtung in Ordnung, keine Sedimentationserscheinung |
| LM | leichte Mattierung |
| M | Film matt, noch keine Verlaufsstörungen |
| S | deutliche Sedimentationserscheinungen |
| n. i. O. | film unbrauchbar |
| A1 | Aluminium |

(fortgesetzt)

| | |
|---|---|
| B1 | Bonder 132 |
| B2 | Bonder 26 |
| B3 | Bonder 26 - verzinkt |
| PBV | Pigment/Bindemittel-Verhältnis |
| | |
| P | Pieken (teilweise unter Mikroskop beurteilt) |
| K | Krater |
| D | Dellen |
| U | Überbeschichtung |
| A | Aufbruchartige Beschichtung |
| F | Kantenflucht |

Die Beschichtungen auf den verschiedenen Untergründen (A1, B1, B2 und B3 erfolgten unter gleichen Abscheidebedingungen und dürfen keine Unterschiede (= 2 µm) in der Schichtstärke (~ 20 µm) aufweisen. Auch müssen Verlauf, Kantenabdeckung und Mattierung des Films in Ordnung sein.

Aus der Tabelle 4 folgt, daß die erfindungsgemäßen Pigmentpasten den gestellten Anforderungen hinsichtlich Stabilität und Beschichtungsverhalten gerecht werden. Bei den Vergleichspasten (vor allem 6.5.) zeigt sich, daß sie ungünstiger im Siebrückstand und L-Blech sind und die hohen Pigment-Bindemittelverhältnisse dem eher noch abträglich sind (PBV ~ 35:1).

Praktisch gleiche Ergebnisse wurden erhalten, wenn anstelle des Pastenharzes IA) 3 ein solches eingesetzt wurde, bei dem entweder in der Stufe A) 1 anstelle von Epicote 1001 ein anderes Epoxidharz, wie z.B. Epicote 1002, oder in der Stufe A)2 anstelle von Triethylamin N,N-Dimethylethanolamin verwendet wurden.

Gleiches gilt auch bei Einsatz des Pastenharzes B) anstelle des Pastenharzes A).

**Tabelle 4**

| Prüfkombination | Klarlack Dispersion | Pigment-Paste | PBV-Lack | Siebrückstand 24 h | Siebrückstand 14 d | Siebrückstand 4 wo | "L-Blech" nach 24 h | "L-Blech" nach 14d | "L-Blech" nach 4 wo | Beschichtung auf A1 | Beschichtung auf B1 | Beschichtung auf B2 | Beschichtung auf B3 |
|---|---|---|---|---|---|---|---|---|---|---|---|---|---|
| 1 | I | IV. 1. | 0,4 : 1 | 10 | 20 | 20 | i.O. | i.O. | i.O. | i.O. | i.O. | i.O. | i.O. |
| 2 | I | IV. 2. | 0,5 : 1 | 20 | 30 | 50 | i.O. | i.O. | LM | i.O. | i.O. | i.O. | P |
| 3 | I | IV. 3. } Vergl. | 0,4 : 1 | 30 | 50 | 100 | i.O. | LM | LM | P,U | i.O. | i.O. | P,K |
| 4 | I | IV. 4. } Vergl. | 0,5 : 1 | 30 | 80 | n.i.O. | i.O. | S | S | P | i.O. | i.O. | P,K |
| 5 | II | IV. 1. | 0,4 : 1 | 30 | 50 | 80 | i.O. | i.O. | i.O. | i.O. | i.O. | i.O. | i.O. |
| 6 | II | IV. 2. | 0,5 : 1 | 50 | 50 | 80 | i.O. | LM | M | i.O. | i.O. | I.O. | P |
| 7 | II | IV. 3. } Vergl. | 0,4 : 1 | 50 | 80 | 180 | i.O. | S | S | U | i.O. | D | P,K |
| 8 | II | IV. 4 } Vergl. | 0,5 : 1 | 40 | 100 | 200 | M | S | n.i.O. | A | i.O. | i.O. | P,U |

**Patentansprüche**

**Patentansprüche für folgende Vertragsstaaten : AT, DE, FR, IT, SE**

1. Pastenharze hergestellt aus Aminen (A), Epoxyverbindungen (B) und Isocyanaten (D), wobei diese Pastenharze enthalten

   (a) quaternäre Ammoniumgruppen der Formel (Ia)

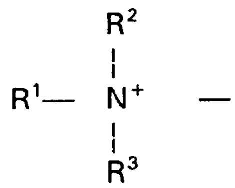

(Ia),

   in der die Reste $R^1$ bis $R^3$ unabhängig voneinander für einen, gegebenenfalls OH-Gruppen und/oder Aminogruppen tragenden und/oder O-Atome enthaltenden Kohlenwasserstoffrest mit 1 bis 7 C-Atomen stehen, oder zwei dieser Reste einen cycloaliphatischen Ring bilden, und/oder quaternäre Ammoniumgruppen der Formel (Ib)

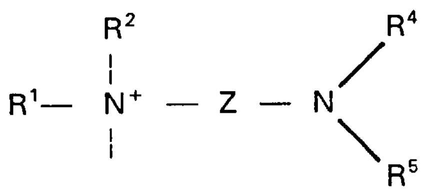

(Ib)

   in der die Reste $R^1$ und $R^2$ die obige Bedeutung haben,
   Z für einen linearen, verzweigten oder cyclischen Alkylenrest mit 2 bis 18 C-Atomen steht, der gegebenenfalls OH-Gruppen tragen und/oder O-Atome enthalten kann, und
   $R^4$ und $R^5$ unabhängig voneinander einen Kohlenwasserstoffrest mit 2 bis 50 C-Atomen bedeuten, der gegebenenfalls OH- und/oder Silan-Gruppen tragen und/oder O-Atome enthalten kann, oder einer der beiden Reste $R^4$ und $R^5$ mit Z einen Ring bilden kann,
   (b) OH-Gruppen und
   (c) Urethangruppierungen, die an die Epoxyverbindung gebunden sind, und von denen sich mindestens 10 Mol von 100 Mol von einem langkettigen, monofunktionellen Isocyanat mit mindestens 8 C-Atomen ableiten,

   wobei die zahlenmittlere Molmasse $M_n$ dieser Pastenharze 500 bis 10000 g/mol beträgt, mit der Maßgabe, daß das Pastenharz keine Gruppen der Formel (Ic) enthält,

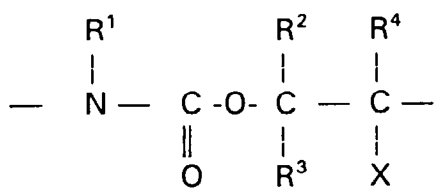

(Ic)

   worin $R^1$ bis $R^4$ jeweils unabhängig voneinander für Wasserstoff oder einen Kohlenwasserstoffrest mit 1 bis 10 Kohlenstoffatomen stehen, und X eine Hydroxylgruppe oder einen Isocyanatrest bedeutet.

2. Pastenharze nach Anspruch 1, dadurch gekennzeichnet, daß diese Pastenharze pro Molekül im Mittel 1 bis 4 der Gruppen (a) enthalten.

3. Pastenharze nach Anspruch 1 und/oder 2, dadurch gekennzeichnet, daß die Zahl der Gruppen (b) im Mittel 1 bis 20 pro Molekül beträgt.

**4.** Pastenharze nach mindestens einem der Ansprüche 1 bis 3, dadurch gekennzeichnet, daß die Zahl der Gruppen (c) im Mittel bei 1 bis 15 pro Molekül liegt.

**5.** Pastenharze nach mindestens einem der Ansprüche 1 bis 4, dadurch gekennzeichnet, daß sich die Urethangruppierungen -O-CO-NH-$R^6$ (c) von Monoisocyanaten mit 8 bis 22 C-Atomen oder von teilverkappten Polyisocyanaten mit einer Gesamt-C-Zahl von 10 bis 50 ableiten, wobei die teilverkappten Polyisocyanate unter Härtungsbedingungen nicht entkappen.

**6.** Pastenharze nach mindestens einem der Ansprüche 1 bis 5, dadurch gekennzeichnet, daß die zahlenmittlere Molmasse $M_n$ 1000 bis 5000 g/mol beträgt.

**7.** Pastenharze nach mindestens einem der Ansprüche 1 bis 6, dadurch gekennzeichnet, daß deren OH-Zahlen 10 bis 200 mg/g betragen.

**8.** Pastenharze nach mindestens einem der Ansprüche 1 bis 7, dadurch gekennzeichnet, daß deren Epoxyzahlen unterhalb von 0,5 g/100 g liegen.

**9.** Pastenharze nach mindestens einem der Ansprüche 1 bis 8, dadurch gekennzeichnet, daß der Gehalt an quaternärem Stickstoff 0,2 bis 20 meq. pro Gramm beträgt.

**10.** Pastenharze nach mindestens einem der Ansprüche 1 bis 9, dadurch gekennzeichnet, daß der Massenanteil an Urethangruppierungen

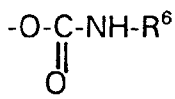

(c) 3 bis 50 % beträgt, bezogen auf die Masse des Pastenharzes.

**11.** Verfahren zur Herstellung der Pastenharze nach mindestens einem der Ansprüche 1 bis 10, dadurch gekennzeichnet, daß man zunächst Verbindungen (B), die mindestens eine 1,2-Epoxgruppe sowie OH-Gruppen enthalten, mit langkettigen, monofunktionellen Isocyanaten (D1), gegebenenfalls in Abmischung mit teilverkappten Isocyanaten (D2), zur Reaktion bringt und dieses Reaktionsprodukt dann mit Aminen (A) unter Bedingungen, die zu quaternären Aminogruppen führen, umsetzt, wobei die teilverkappten Polyisocyanate unter Härtungsbedingungen nicht entkappen.

**12.** Verfahren zur Herstellung der Pastenharze nach mindestens einem der Ansprüche 1 bis 10, dadurch gekennzeichnet, daß man zunächst Verbindungen (B), die mindestens eine 1,2-Epoxygruppe enthalten, mit Aminen (A) zur Reaktion bringt, das daraus resultierende Umsetzungsprodukt (C) dann mit langkettigen, monofunktionellen Isocyanaten (D1), gegebenenfalls in Abmischung mit teilverkappten Isocyanaten (D2), umsetzt und gegebenenfalls anschließend daran die Quaternierung durchgeführt wird, wobei die teilverkappten Polyisocyanate unter Härtungsbedingungen nicht entkappen.

**13.** Verfahren nach Anspruch 11 oder 12, dadurch gekennzeichnet, daß man als Amine (A) solche der Formel (III) einsetzt,

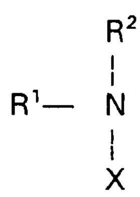

(III),

in der $R^1$ und $R^2$ die Bedeutung gemäß der Formel (Ia) und X für $R^3$ gemäß Formel (Ia) oder für Wasserstoff steht.

**14.** Verfahren nach mindestens einem der Ansprüche 11 bis 13, dadurch gekennzeichnet, daß man als Verbindungen (B) solche der Formel (IV)

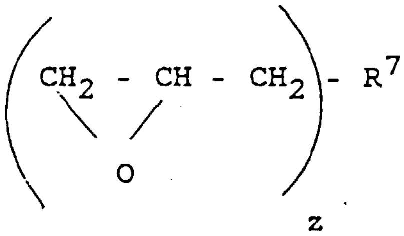

(IV)

einsetzt, in der bedeuten:

$R^7$ = z-wertiger Rest eines Polyethers, Polyetherpolyols, Polyesters, Polyesterpolyols, der gegebenenfalls auch ($NR^8$)-Gruppen enthalten kann, wobei $R^8$ für Wasserstoff, Alkyl mit 1 bis 14 C-Atomen oder Hydroxyalkyl mit 1 bis 14 C-Atomen steht, oder einen z-wertigen Kohlenwasserstoffrest, vorzugsweise Alkylenrest mit 2 bis 18 C-Atomen, der gegebenenfalls auch inerte oder nichtstörende Gruppen tragen kann, oder einen z-wertigen Poly(sek.)aminrest

z = 1 bis 5, vorzugsweise 2.

**15.** Verfahren nach mindestens einem der Ansprüche 11 bis 14, dadurch gekennzeichnet, daß (A) und (B) in solchen Mengen eingesetzt werden, daß das Verhältnis der Anzahl von mit Epoxygruppen reaktiven Aminogruppen zu Epoxygruppen 0,8 bis 1,3 zu 1 beträgt.

**16.** Verfahren nach mindestens einem der Ansprüche 11 bis 15, dadurch gekennzeichnet, daß als langkettige, monofunktionelle Isocyanate (D1) langkettige Monoisocyanate mit 8 bis 22 C-Atomen eingesetzt werden.

**17.** Verfahren nach mindestens einem der Ansprüche 11 bis 16, dadurch gekennzeichnet, daß der molare Anteil an Isocyanat (D1) 50 bis 100 % und der molare Anteil an Isocyanat (D2) 0 bis 50 % beträgt.

**18.** Pigmentpaste, enthaltend die Pastenharze gemäß mindestens einem der Ansprüche 1 bis 6 und ein darin dispergiertes Pigment.

**19.** Verwendung der Pastenharze gemäß mindestens einem der Ansprüche 1 bis 6 zur Herstellung von Pigmentpasten.

**Patentansprüche für folgenden Vertragsstaat : ES**

**1.** Verfahren zur Herstellung von gegebenenfalls selbsthärtenden Pastenharzen auf Basis von Epoxidverbindungen, welche Pastenharze enthalten

(a) quaternäre Ammoniumgruppen der Formel (Ia)

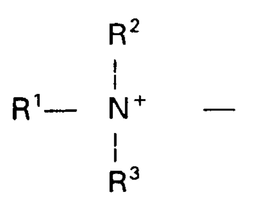

(Ia),

in der die Reste $R^1$ bis $R^3$ unabhängig voneinander für einen, gegebenenfalls OH-Gruppen und/oder Aminogruppen tragenden und/oder O-Atome enthaltenden Kohlenwasserstoffrest mit 1 bis 7 C-Atomen stehen, oder zwei dieser Reste einen cycloaliphatischen Ring bilden, und/oder quaternäre Ammoniumgruppen der Formel (Ib)

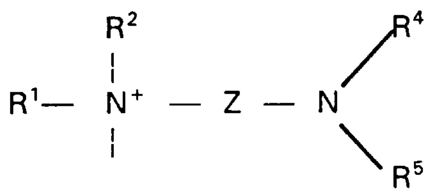

(Ib)

in der die Reste $R^1$ und $R^2$ die obige Bedeutung haben,
Z für einen linearen, verzweigten oder cyclischen Alkylenrest mit 2 bis 18 C-Atomen steht, der gegebenenfalls OH-Gruppen tragen und/oder O-Atome enthalten kann, und
$R^4$ und $R^5$ unabhängig voneinander einen Kohlenwasserstoffrest mit 2 bis 50 C-Atomen bedeuten, der gegebenenfalls OH- und/oder Silan-Gruppen tragen und/oder O-Atome enthalten kann, oder einer der beiden Reste $R^4$ und $R^5$ mit Z einen Ring bilden kann,
(b) OH-Gruppen und
(c) Urethangruppierungen, die an die Epoxyverbindung gebunden sind, und von denen sich mindestens 10 Mol von 100 Mol von einem langkettigen, monofunktionellen Isocyanat mit mindestens 8 C-Atomen ableiten,

wobei die zahlenmittlere Molmasse $M_n$ dieser Pastenharze 500 bis 10000 g/mol beträgt, mit der Maßgabe, daß das Pastenharz keine Gruppen der Formel (Ic) enthält,

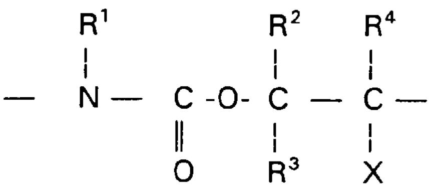

(Ic)

worin $R^1$ bis $R^4$ jeweils unabhängig voneinander für Wasserstoff oder einen Kohlenwasserstoffrest mit 1 bis 10 Kohlenstoffatomen stehen, und X eine Hydroxylgruppe oder einen Isocyanatrest bedeutet, dadurch gekennzeichnet, daß man zunächst Verbindungen (B), die mindestens eine 1,2-Epoxygruppe sowie OH-Gruppen enthalten, mit langkettigen, monofunktionellen Isocyanaten (D1), gegebenenfalls in Abmischung mit teilverkappten Isocyanaten (D2), zur Reaktion bringt und dieses Reaktionsprodukt dann mit Aminen (A) unter Bedingungen, die zu quaternären Aminogruppen führen, umsetzt, wobei die teilverkappten Polyisocyanate unter Härtungsbedingungen nicht entkappen.

**2.** Verfahren zur Herstellung von gegebenenfalls selbsthärtenden Pastenharzen auf Basis von Epoxidverbindungen, welche Pastenharze enthalten

(a) quaternäre Ammoniumgruppen der Formel (Ia)

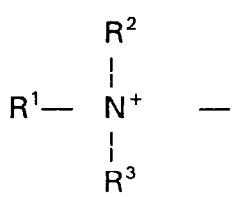

(Ia),

in der die Reste $R^1$ bis $R^3$ unabhängig voneinander für einen, gegebenenfalls OH-Gruppen und/oder Aminogruppen tragenden und/oder O-Atome enthaltenden Kohlenwasserstoffrest mit 1 bis 7 C-Atomen stehen, oder zwei dieser Reste einen cycloaliphatischen Ring bilden, und/oder quaternäre Ammoniumgruppen der Formel (Ib)

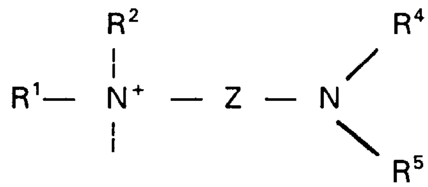 (Ib)

in der die Reste $R^1$ und $R^2$ die obige Bedeutung haben,
Z für einen linearen, verzweigten oder cyclischen Alkylenrest mit 2 bis 18 C-Atomen steht, der gegebenenfalls OH-Gruppen tragen und/oder O-Atome enthalten kann, und
$R^4$ und $R^5$ unabhängig voneinander einen Kohlenwasserstoffrest mit 2 bis 50 C-Atomen bedeuten, der gegebenenfalls OH- und/oder Silan-Gruppen tragen und/oder O-Atome enthalten kann, oder einer der beiden Reste $R^4$ und $R^5$ mit Z einen Ring bilden kann,
(b) OH-Gruppen und
(c) Urethangruppierungen, die an die Epoxyverbindung gebunden sind, und von denen sich mindestens 10 Mol von 100 Mol von einem langkettigen, monofunktionellen Isocyanat mit mindestens 8 C-Atomen ableiten,

wobei die zahlenmittlere Molmasse (Mn) dieser Pastenharze 500 bis 10000 g/mol beträgt, mit der Maßgabe, daß das Pastenharz keine Gruppen der Formel (Ic) enthält,

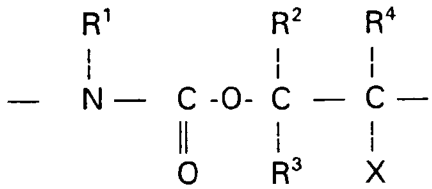 (Ic)

worin $R^1$ bis $R^4$ jeweils unabhängig voneinander für Wasserstoff oder einen Kohlenwasserstoffrest mit 1 bis 10 Kohlenstoffatomen stehen, und X eine Hydroxylgruppe oder einen Isocyanatrest bedeutet, man zunächst Verbindungen (B), die mindestens eine 1,2-Epoxygruppe enthalten, mit Aminen (A) zur Reaktion bringt, mit dem Kennzeichen, daß das daraus resultierende Umsetzungsprodukt (C) dann mit langkettigen, monofunktionellen Isocyanaten (D1), gegebenenfalls in Abmischung mit teilverkappten Isocyanaten (D2), umsetzt und gegebenenfalls anschließend daran die Quaternierung durchgeführt wird, wobei die teilverkappten Polyisocyanate unter Härtungsbedingungen nicht entkappen.

**3.** Verfahren nach Anspruch 1 oder 2, dadurch gekennzeichnet, daß man als Amine (A) solche der Formel (III) einsetzt,

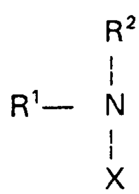 (III),

in der $R^1$ und $R^2$ die Bedeutung gemäß der Formel (Ia) und X für $R^3$ gemäß Formel (Ia) oder für Wasserstoff steht.

**4.** Verfahren nach mindestens einem der Ansprüche 1 bis 3, dadurch gekennzeichnet, daß man als Verbindungen (B) solche der Formel (IV)

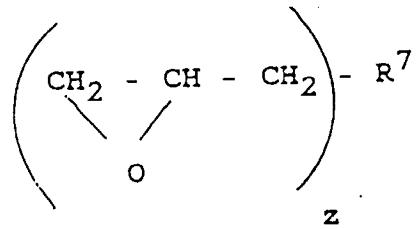

(IV)

einsetzt, in der bedeuten:

$R^7$ = z-wertiger Rest eines Polyethers, Polyetherpolyols, Polyesters, Polyesterpolyols, der gegebenenfalls auch ($NR^8$)-Gruppen enthalten kann, wobei $R^8$ für Wasserstoff, Alkyl mit 1 bis 14 C-Atomen oder Hydroxyalkyl mit 1 bis 14 C-Atomen steht, oder einen z-wertigen Kohlenwasserstoffrest, vorzugsweise Alkylenrest mit 2 bis 18 C-Atomen, der gegebenenfalls auch inerte oder nichtstörende Gruppen tragen kann, oder einen z-wertigen Poly(sek.)aminrest

z = 1 bis 5, vorzugsweise 2.

**5.** Verfahren nach mindestens einem der Ansprüche 1 bis 4, dadurch gekennzeichnet, daß (A) und (B) in solchen Mengen eingesetzt werden, daß das Verhältnis der Anzahl von mit Epoxygruppen reaktiven Aminogruppen zu Epoxygruppen 0,8 bis 1,3 zu 1 beträgt.

**6.** Verfahren nach mindestens einem der Ansprüche 1 bis 5, dadurch gekennzeichnet, daß als langkettige, monofunktionelle Isocyanate (D1) langkettige Monoisocyanate mit 8 bis 22 C-Atomen eingesetzt werden.

**7.** Verfahren nach mindestens einem der Ansprüche 1 bis 6, dadurch gekennzeichnet, daß der molare Anteil an Isocyanat (D1) 50 bis 100 % und der molare Anteil an Isocyanat (D2) 0 bis 50 % beträgt.

**8.** Verfahren nach mindestens einem der Ansprüche 1 bis 7, dadurch gekennzeichnet, daß die Pastenharze pro Molekül im Mittel 1 bis 4 der Gruppen (a) enthalten.

**9.** Verfahren nach mindestens einem der Ansprüche 1 bis 8, dadurch gekennzeichnet, daß die Zahl der Gruppen (b) im Mittel 1 bis 20 pro Molekül beträgt.

**10.** Verfahren nach mindestens einem der Ansprüche 1 bis 9, dadurch gekennzeichnet, daß die Zahl der Gruppen (c) im Mittel bei 1 bis 15 pro Molekül liegt.

**11.** Pigmentpaste, enthaltend ein Pastenharz und ein darin dispergiertes Pigment, worin das Pastenharz ein solches auf Basis von Epoxyverbindungen darstellt, das enthält

(a) quaternäre Ammoniumgruppen der Formel (Ia)

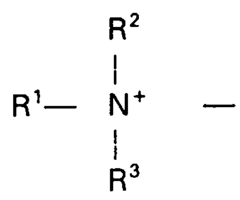

(Ia),

in der die Reste $R^1$ bis $R^3$ unabhängig voneinander für einen, gegebenenfalls OH-Gruppen und/oder Aminogruppen tragenden und/oder O-Atome enthaltenden Kohlenwasserstoffrest mit 1 bis 7 C-Atomen stehen, oder zwei dieser Reste einen cycloaliphatischen Ring bilden, und/oder quaternäre Ammoniumgruppen der Formel (Ib)

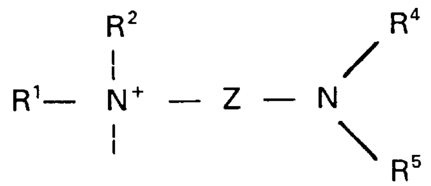 (Ib)

in der die Reste $R^1$ und $R^2$ die obige Bedeutung haben,
Z für einen linearen, verzweigten oder cyclischen Alkylenrest mit 2 bis 18 C-Atomen steht, der gegebenenfalls OH-Gruppen tragen und/oder O-Atome enthalten kann, und
$R^4$ und $R^5$ unabhängig voneinander einen Kohlenwasserstoffrest mit 2 bis 50 C-Atomen bedeuten, der gegebenenfalls OH- und/oder Silan-Gruppen tragen und/oder O-Atome enthalten kann, oder einer der beiden Reste $R^4$ und $R^5$ mit Z einen Ring bilden kann
(b) OH-Gruppen und
(c) Urethangruppierungen, die an die Epoxyverbindung gebunden sind, und von denen sich mindestens 10 Mol von 100 Mol von einem langkettigen, monofunktionellen Isocyanat mit mindestens 8 C-Atomen ableiten,

wobei die zahlenmittlere Molmasse (Mn) dieser Pastenharze 500 bis 10000 g/mol beträgt, mit der Maßgabe, daß das Pastenharz keine Gruppen der Formel (Ic) nach Anspruch 1 enthält.

**12.** Verwendung der Pastenharze erhalten gemäß mindestens einem der Ansprüche 1 bis 10 zur Herstellung von Pigmentpasten.

## Claims

**Claims for the following Contracting States : AT, DE, FR, IT, SE**

**1.** Paste resins prepared from amines (A), epoxy compounds (B) and isocyanates (D), said paste resins containing

(a) quaternary ammonium groups of the formula (Ia)

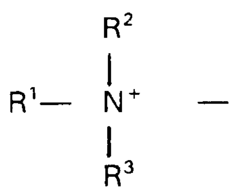 (Ia),

in which the radicals $R^1$ to $R^3$ independently of one another represent a hydrocarbon radical having 1 to 7 carbon atoms, optionally carrying OH groups and/or amino groups and/or containing oxygen atoms, or two of these radicals form a cycloaliphatic ring, and/or quaternary ammonium groups of the formula (Ib)

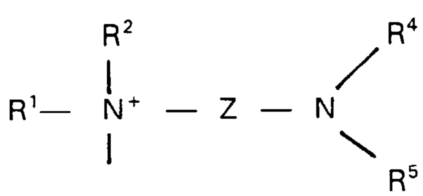 (Ib)

in which the radicals $R^1$ and $R^2$ have the meaning as above,

Z represents a linear, branched or cyclic alkylene radical having 2 to 18 carbon atoms, which may optionally carry OH groups and/or contain oxygen atoms, and
$R^4$ and $R^5$ independently of one another denote a hydrocarbon radical having 2 to 50 carbon atoms, which may optionally carry OH and/or silane groups and/or contain oxygen atoms, or one of the two radicals $R^4$/$R^5$ may form a ring with Z,

(b) OH groups and

(c) urethane radicals which are bonded to the epoxy compound, and of which at least 10 mol out of 100 mol are derived from a long-chain, monofunctional isocyanate having at least 8 carbon atoms, the number average molar mass ($M_n$) of these paste resins being 500 to 10,000, with the proviso that the paste resin does not contain any groups of the formula (Ic)

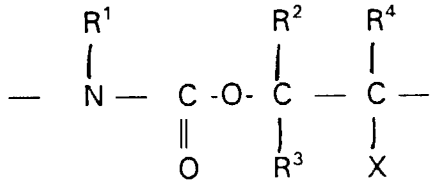 (Ic)

in which each of $R^1$ to $R^4$ independently of one another denote hydrogen or a hydrogen or a hydrocarbon radical having 1 to 10 carbon atoms, and X denotes a hydroxyl group or an icsocyanate radical.

2. The paste resins as claimed in claim 1, wherein said paste resins on average contain 1 to 4 of the groups (a) per molecule.

3. The paste resins as claimed in claim 1 and/or 2, wherein the number of groups (b) on average is 1 to 20 per molecule.

4. The paste resins as claimed in at least one of claims 1 to 3, wherein the number of groups (c) on average is 1 to 15 per molecule.

5. The paste resins as claimed in at least one of claims 1 to 4, wherein the urethane groupings $-O-CO-NH-R^6$ are derived from monoisocyanates having 8 to 22 carbon atoms or from partly masked polyisocyanates having a total carbon number of 10 to 50, whereby the partly masked polyisocyanates are not unmasked under curing conditions.

6. The paste resins as claimed in at least one of claims 1 to 5, wherein the number average molar mass ($\overline{M}n$) is 1,000 to 5,000 g/mol.

7. The paste resins as claimed in at least one of claims 1 to 6, wherein the OH values of these are 10 to 200 mg/g.

8. The paste resins as claimed in at least one of claims 1 to 7, wherein the epoxy values of these are below 0.5 g/100 g.

9. The paste resins as claimed in at least one of claims 1 to 8, wherein the amount of quaternary nitrogen is 0.2 to 20 milliequivalents per gram.

10. The paste resins as claimed in at least one of claims 1 to 9, wherein the mass fraction of urethane groupings

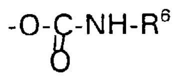

(c) is 3 to 50 % by weight, relative to the weight of the paste resin.

11. A process for the preparation of the paste resins as claimed in at least one of claims 1 to 10, wherein compounds (B) which contain at least one 1,2-epoxy group and OH groups are first made to react with long-chain, monofunctional isocyanates (D1), if appropriate mixed with partly masked isocyanates (D2), and this reaction product is then reacted with amines (A) under conditions which lead to quaternary amino groups, whereby the partly masked polyisocyanates are not unmasked under curing conditions.

12. A process for the preparation of the paste resins as claimed in at least one of claims 1 to 10, wherein compounds (B) which contain at least one 1,2-epoxy group are first made to react with amines (A), the reaction product (C) resulting from this is then reacted with long-chain, mono-functional isocyanates (D1), if appropriate mixed with partly masked isocyanates (D2), and if appropriate the quaternization is carried out subsequent thereto, whereby the partly masked polyisocyanates are not unmasked under curing conditions.

**13.** The process as claimed in claim 11 or 12, wherein as amines (A), those of the formula (III) are employed,

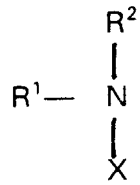 (III),

in which $R^1$ and $R^2$ are as defined in formula (Ia) and X stands for $R^3$ as in formula (Ia) or for hydrogen.

**14.** The process as claimed in at least one of claims 11 to 13, wherein as compounds (B) those of the formula (IV)

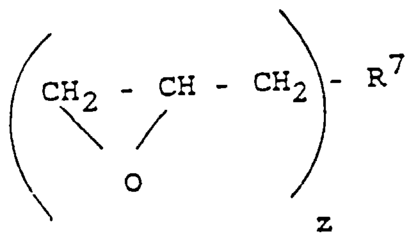 (IV)

are employed, in which:

$R^7$ denotes a z-valent radical of a polyether, polyether polyol, polyester, polyester polyol which can also optionally contain ($NR^8$) groups, $R^8$ representing hydrogen, alkyl of 1 to 14 carbon atoms or hydroxy-alkyl of 1 to 14 carbon atoms, or a z-valent hydro-carbon radical, preferably an alkylene radical of 2 to 18 carbon atoms which can optionally carry inert or non-interfering groups, or
a z-valent poly(sec.) amine radical, with

z denoting 1 to 5, perferably 2.

**15.** The process as claimed in at least one of claims 11 to 14, wherein (A) and (B) are employed in such amounts that the ratio of amino groups reacting with epoxy groups to epoxy groups is 0.8 :1 to 1.3 : 1.

**16.** The process as claimed in at least one of claims 11 to 15, wherein long-chain monoisocyanates having 8 to 22 carbon atoms are employed as the long-chain, monofunctional isocyanates (D1).

**17.** The process as claimed in at least one of claims 11 to 16, wherein the molar amount of isocyanate (D1) is 50 to 100 % and the molar amount of isocyanate (D2) is 0 to 50 %.

**18.** A pigment paste containing the paste resins as claimed in at least one of claims 1 to 6 and a pigment dispersed therein.

**19.** The use of the paste resins as claimed in at least one of claims 1 to 6 for the preparation of pigment pastes.

**Claims for the following Contracting State : ES**

**1.** A process for the preparation of optionally self-curing paste resins based on epoxy compounds, these paste resins containing

(a) quaternary ammonium groups of the formula (Ia)

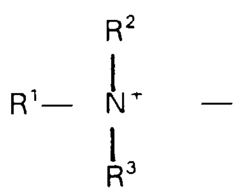 (Ia),

in which the radicals $R^1$ to $R^3$ independently of one another represent a hydrocarbon radical having 1 to 7 carbon atoms, or two of these radicals form a cycloaliphatic ring, or quaternary ammonium groups of the formula (Ib)

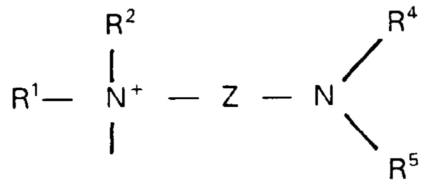

(Ib)

in which the radicals $R^1$ and $R^2$ have the meaning as above,

Z represents a linear, branched or cyclic alkylene radical having 2 to 18 carbon atoms, which may optionally carry OH groups and/or contain oxygen atoms, and

$R^4$ and $R^5$ independently of one another denote a hydrocarbon radical having 2 to 50 carbon atoms, which may optionally carry OH and/or silane groups and/or contain oxygen atoms, or one of the two radicals $R^4$/$R^5$ may form a ring with Z,

(b) OH groups and

(c) urethane radicals which are bonded to the epoxy compound, and of which at least 10 mol out of 100 mol are derived from a long-chain, monofunctional isocyanate having at least 8 carbon atoms, the number average molar mass ($M_n$) of these paste resins being 500 to 10,000 g/mol, with the proviso that the paste resin does not contain any groups of the formula (Ic)

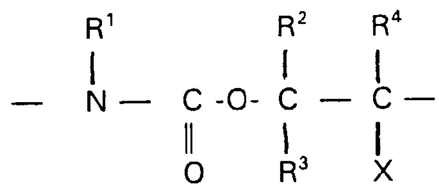

(Ic)

in which each of $R^1$ to $R^4$ independently of one another denote hydrogen or a hydrogen or a hydrocarbon radical having 1 to 10 carbon atoms, and X denotes a hydroxyl group or an icsocyanate radical, characterized in that compounds (B) which contain at least one 1,2-epoxy group and OH groups are first made to react with long-chain, monofunctional isocyanates (D1), if appropriate mixed with partly masked isocyanates (D2), and this reaction product is then reacted with amines (A) under conditions which lead to quaternary amino groups, whereby the partly masked polyisocyanates are not unmasked under curing conditions.

**2.** A process for the preparation of optionally self-curing paste resins based on epoxy compounds, these paste resins containing

(a) quaternary ammonium groups of the formula (Ia)

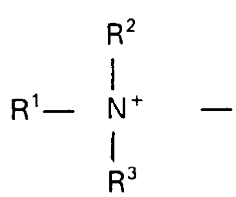

(Ia),

in which the radicals $R^1$ to $R^3$ independently of one another represent a hydrocarbon radical having 1 to 7 carbon atoms, or two of these radicals form a cycloaliphatic ring, or quaternary ammonium groups of the formula (Ib)

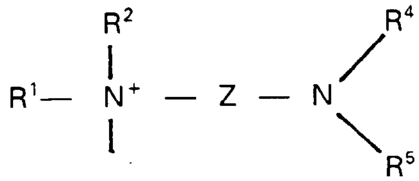

(Ib)

in which the radicals $R^1$ and $R^2$ have the meaning as above,

| | |
|---|---|
| Z | represents a linear, branched or cyclic alkylene radical having 2 to 18 carbon atoms, which may optionally carry OH groups and/or contain oxygen atoms, and |
| $R^4$ and $R^5$ | independently of one another denote a hydrocarbon radical having 2 to 50 carbon atoms, which may optionally carry OH and/or silane groups and/or contain oxygen atoms, or one of the two radicals $R^4/R^5$ may form a ring with Z, |

(b) OH groups and

(c) urethane radicals which are bonded to the epoxy compound, and of which at least 10 mol out of 100 mol are derived from a long-chain, monofunctional isocyanate having at least 8 carbon atoms,

the number average molar mass ($M_n$) of these paste resins being 500 to 10,000 g/mol, with the proviso that the paste resin does not contain any groups of the formula (Ic)

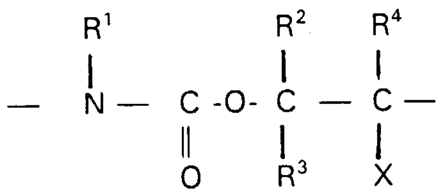

(Ic)

in which each of $R^1$ to $R^4$ independently of one another denote hydrogen or a hydrogen or a hydrocarbon radical having 1 to 10 carbon atoms, and X denotes a hydroxyl group or an icsocyanate radical, in which process compounds (B) which contain at least one 1,2-epoxy group are first made to react with amines (A), characterized in that the reaction with long-chain, monofunctional isocyanates (D1), if appropriate mixed with partly masked isocyanates (D2), and if appropriate the quaternization is carried out subsequent thereto, whereby the partly masked polyisocyanates are not unmasked under curing conditions.

**3.** The process as claimed in claim 1 or 2, wherein as amines (A), those of the formula (III) are employed,

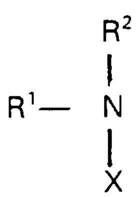

(III),

in which $R^1$ and $R^2$ are as defined in formula (Ia) and X stands for $R^3$ as in formula (Ia) or for hydrogen.

**4.** The process as claimed in at least one of claims 1 to 3, wherein as compounds (B) those of the formula (IV)

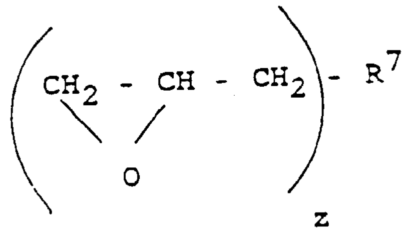

(IV)

are employed, in which:

- $R^7$ denotes a z-valent radical of a polyether, polyether polyol, polyester, polyester polyol which can also optionally contain ($NR^8$) groups, $R^8$ representing hydrogen, alkyl of 1 to 14 carbon atoms or hydroxy-alkyl of 1 to 14 carbon atoms, or a z-valent hydro-carbon radical, preferably an alkylene radical of 2 to 18 carbon atoms which can optionally carry inert or non-interfering groups, or a z-valent poly(sec.) amine radical, with
- z denoting 1 to 5, perferably 2.

**5.** The process as claimed in at least one of claims 1 to 4, wherein (A) and (B) are employed in such amounts that the ratio of amino groups reacting with epoxy groups to epoxy groups is 0.8 :1 to 1.3 : 1.

**6.** The process as claimed in at least one of claims 1 to 5, wherein long-chain monoisocyanates having 8 to 22 carbon atoms are employed as the long-chain, monofunctional isocyanates (D1).

**7.** The process as claimed in at least one of claims 1 to 6, wherein the molar amount of isocyanate (D1) is 50 to 100 % and the molar amount of isocyanate (D2) is 0 to 50 %.

**8.** The process as claimed in at least one of claims 1 to 7, wherein said paste resins on average contain 1 to 4 of the groups (a) per molecule.

**9.** The process as claimed in at least one of claims 1 to 8, wherein the number of groups (b) on average is 1 to 20 per molecule.

**10.** The process as claimed in at least one of claims 1 to 9, wherein the number of groups (c) on average is 1 to 15 per molecule.

**11.** A pigment paste comprising a paste resin and a pigment dispersed therein, where the paste resin is a resin based on epoxy compounds and contains

(a) quaternary ammonium groups of the formula (Ia)

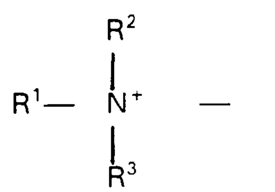

(Ia),

in which the radicals $R^1$ to $R^3$ independently of one another represent a hydrocarbon radical having 1 to 7 carbon atoms, or two of these radicals form a cycloaliphatic ring, or quaternary ammonium groups of the formula (Ib)

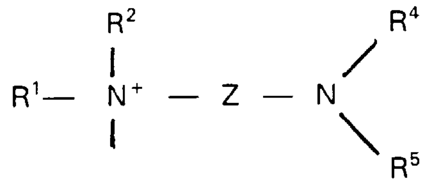 (Ib)

in which the radicals $R^1$ and $R^2$ have the meaning as above,

Z represents a linear, branched or cyclic alkylene radical having 2 to 18 carbon atoms, which may optionally carry OH groups and/or contain oxygen atoms, and

$R^4$ and $R^5$ independently of one another denote a hydrocarbon radical having 2 to 50 carbon atoms, which may optionally carry OH and/or silane groups and/or contain oxygen atoms, or one of the two radicals $R^4/R^5$ may form a ring with Z,

(b) OH groups and

(c) urethane radicals which are bonded to the epoxy compound, and of which at least 10 mol out of 100 mol are derived from a long-chain, monofunctional isocyanate having at least 8 carbon atoms, the number average molar mass ($M_n$) of these paste resins being 500 to 10,000 g/mol, with the proviso that the paste resin does not contain any groups corresponding to formula (Ic) of claim 1.

**12.** Use of the paste resins obtained as claimed in at least one of claims 1 to 10 for the preparation of pigment pastes.

**Revendications**

**Revendications pour les Etats contractants suivants: AT, DE, FR, IT, SE**

**1.** Résines de pâte préparées à partir d'amines (A), de composés époxy (B) et d'isocyanates (D), ces résines de pâte contenant

(a) des groupes ammonium quaternaire de formule (Ia)

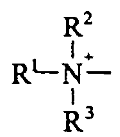 (Ia)

dans laquelle les restes $R^1$ à $R^3$ représentent indépendamment les uns des autres un reste hydrocarboné de 1 à 7 atomes de carbone portant éventuellement des groupes OH et/ou des groupes amino, et/ou contenant éventuellement des atomes d'oxygène, ou deux de ces restes forment un noyau cycloaliphatique, et/ou des groupes ammonium quaternaire de formule (Ib)

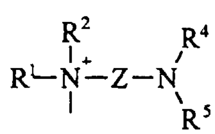 (Ib)

dans laquelle les restes $R^1$ et $R^2$ ont la signification donnée ci-dessus,

Z représente un reste alkylène linéaire, ramifié ou cyclique de 2 à 18 atomes de carbone, qui peut éventuellement porter des groupes OH et/ou contenir des atomes d'oxygène, et

$R^4$ et $R^5$ représentent indépendamment l'un de l'autre un reste hydrocarboné de 2 à 50 atomes de carbone, qui peut éventuellement porter des groupes OH et/ou silane, et/ou contenir des atomes d'oxygène, ou l'un des deux restes $R^4$ et $R^5$ peut former un cycle avec Z,

(b) des groupes OH et

(c) des groupements uréthane liés au composé époxy, et dont au moins 10 mol sur 100 mol dérivent d'un isocyanate monofonctionnel à longue chaîne d'au moins 8 atomes de carbone,

la masse moléculaire moyenne en nombre $\overline{M}_n$ de ces résines de pâte étant comprise entre 500 et 10 000 g/mol, à condition que la résine de pâte ne contienne pas de groupe de formule (Ic)

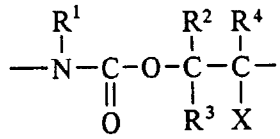

(Ic)

dans laquelle $R^1$ à $R^4$ représentent chacun, indépendamment les uns des autres, un atome d'hydrogène ou un reste hydrocarboné de 1 à 10 atomes de carbone, et X est un groupe hydroxy ou un reste isocyanate.

**2.** Résines de pâte selon la revendication 1, caractérisées en ce que ces résines de pâte contiennent en moyenne 1 à 4 groupes (a) par molécule.

**3.** Résines de pâte selon la revendication 1 et/ou 2, caractérisées en ce que le nombre de groupes (b) est en moyenne de 1 à 20 par molécule.

**4.** Résines de pâte selon l'une au moins des revendications 1 à 3, caractérisées en ce que le nombre de groupes (c) est en moyenne de 1 à 15 par molécule.

**5.** Résines de pâte selon l'une au moins des revendications 1 à 4, caractérisées en ce que les groupements uréthane $-O-CO-NH-R^6$ (c) dérivent de monoisocyanates de 8 à 22 atomes de carbone ou de polyisocyanates partiellement bloqués ayant en tout 10 à 50 atomes de carbone, les polyisocyanates partiellement bloqués ne se débloquant pas dans les conditions du durcissement.

**6.** Résines de pâte selon l'une au moins des revendications 1 à 5, caractérisées en ce que la masse moléculaire moyenne en nombre $\overline{M}_n$ est comprise entre 1000 et 5000 g/mol.

**7.** Résines de pâte selon l'une au moins des revendications 1 à 6, caractérisées en ce que leur indice d'OH est de 10 à 200 mg/g.

**8.** Résines de pâte selon l'une au moins des revendications 1 à 7, caractérisées en ce que leur indice d'époxy est inférieur à 0,5 g/100 g.

**9.** Résines de pâte selon l'une au moins des revendications 1 à 8, caractérisées en ce que leur teneur en ammonium quaternaire est inférieure à 0,2 à 20 milliéquivalents par gramme.

**10.** Résines de pâte selon l'une au moins des revendications 1 à 9, caractérisée en ce que leur teneur en masse en groupements uréthane

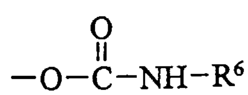

(c) est comprise entre 3 et 50 %, par rapport à la masse de la résine de pâte.

**11.** Procédé de préparation des résines de pâte selon l'une au moins des revendications 1 à 10, caractérisé en ce que l'on fait d'abord réagir des composés (B) contenant au moins un groupe 1,2-époxy et des groupes OH, avec des isocyanates monofonctionnels à longue chaîne (D1), éventuellement en mélange avec des isocyanates partiellement bloqués (D2), puis on fait réagir ce produit de réaction avec des amines (A) dans des conditions qui entraînent la formation de groupes amino quaternaires, les polyisocyanates partiellement bloqués ne se débloquant pas dans les conditions du durcissement.

**12.** Procédé de préparation des résines de pâte selon l'une au moins des revendications 1 à 10, caractérisé en ce que l'on fait réagir d'abord des composés (B), contenant au moins un groupe 1,2-époxy, avec des amines (A), puis

on fait réagir le produit de réaction (C) obtenu avec des isocyanates monofonctionnels à longue chaîne (D1), éventuellement en mélange avec des isocyanates partiellement bloqués (D2), après quoi on procède éventuellement à la quaternisation, les polyisocyanates partiellement bloqués ne se débloquant pas dans les conditions du durcissement.

**13.** Procédé selon la revendication 11 ou 12, caractérisé en ce que l'on utilise comme amines (A) des amines de formule (III)

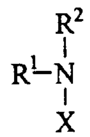

(III)

dans laquelle $R^1$ et $R^2$ ont la signification donnée pour la formule (Ia) ci-dessus et X est $R^3$ selon la formule (Ia) ou représente un atome d'hydrogène.

**14.** Procédé selon l'une au moins des revendications 11 à 13, caractérisé en ce que l'on utilise comme composés (B) des composés de formule (IV)

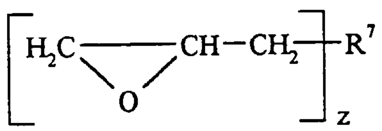

(IV)

dans laquelle

$R^7$ est le reste de valence z d'un polyéther, polyétherpolyol, polyester, polyesterpolyol, qui peut éventuellement contenir en outre des groupes $NR^8$, où $R^8$ est un atome d'hydrogène ou un groupe alkyle de 1 à 14 atomes de carbone ou hydroxyalkyle de 1 à 14 atomes de carbone, ou un reste hydrocarboné de valence z, de préférence un reste alkylène de 2 à 18 atomes de carbone, qui peut éventuellement porter aussi des groupes inertes ou non gênants, ou un reste polyamine (secondaire) de valence z,

z = 1 à 5, de préférence 2.

**15.** Procédé selon l'une au moins des revendications II à 14, caractérisé en ce que l'on utilise (A) et (B) en des quantités telles que le rapport du nombre de groupes amino réactifs vis-à-vis des groupes époxy aux groupes époxy est de 0,8 - 1,3 à 1.

**16.** Procédé selon l'une au moins des revendications 11 à 15, caractérisé en ce que l'on utilise comme isocyanates monofonctionnels à longue chaîne (D1) des monoisocyanates à longue chaîne de 8 à 22 atomes de carbone.

**17.** Procédé selon l'une au moins des revendications 11 à 16, caractérisé en ce que la fraction en moles d'isocyanate (D1) est de 50 à 100 % et la fraction en moles d'isocyanate (D2) est de 0 à 50 %.

**18.** Pâtes de pigments contenant les résines de pâte selon l'une au moins des revendications 1 à 6 et un pigment qui y est dispersé.

**19.** Utilisation des résines de pâte selon l'une au moins des revendications 1 à 6 pour la préparation de pâtes de pigments.

**Revendications pour l'Etat contractant suivant : ES**

**1.** Procédé de préparation de résines de pâte éventuellement autodurcissantes à base de composés époxy, ces résines de pâte contenant

(a) des groupes ammonium quaternaire de formule (Ia)

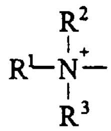

(Ia)

dans laquelle les restes $R^1$ à $R^3$ représentent indépendamment les uns des autres un reste hydrocarboné de 1 à 7 atomes de carbone portant éventuellement des groupes OH et/ou des groupes amino, et/ou contenant éventuellement des atomes d'oxygène, ou deux de ces restes forment un noyau cycloaliphatique, et/ou des groupes ammonium quaternaire de formule (Ib)

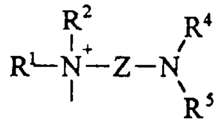

(Ib)

dans laquelle les restes $R^1$ et $R^2$ ont la signification donnée ci-dessus,

Z représente un reste alkylène linéaire, ramifié ou cyclique de 2 à 18 atomes de carbone, qui peut porter éventuellement des groupes OH et/ou contenir des atomes d'oxygène, et

$R^4$ et $R^5$ représentent indépendamment l'un de l'autre un reste hydrocarboné de 2 à 50 atomes de carbone, qui peut éventuellement porter des groupes OH et/ou silane, et/ou contenir des atomes d'oxygène, ou l'un des deux restes $R^4$ et $R^5$ peut former un cycle avec Z,

(b) des groupes OH et
(c) des groupements uréthane liés au composé époxy, et dont au moins 10 mol sur 100 mol dérivent d'un isocyanate monofonctionnel à longue chaîne contenant au moins 8 atomes de carbone,

la masse moléculaire moyenne en nombre $\overline{M}_n$ de ces résines de pâte étant comprise entre 500 et 10 000 g/mol, à condition que la résine de pâte ne contienne pas de groupe de formule (Ic)

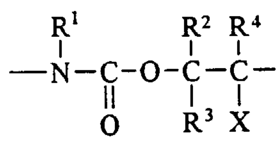

(Ic)

dans laquelle $R^1$ à $R^4$ représentent chacun, indépendamment les uns des autres, un atome d'hydrogène ou un reste hydrocarboné de 1 à 10 atomes de carbone, et X est un groupe hydroxy ou un reste isocyanate, caractérisé en ce que l'on fait d'abord réagir des composés (B), contenant au moins un groupe 1,2-époxy et des groupes OH, avec des isocyanates monofonctionnels à longue chaîne (D1), éventuellement en mélange avec des isocyanates partiellement bloqués (D2), puis on fait réagir ce produit de réaction avec des amines (A) dans des conditions qui entraînent la formation de groupes amino quaternaires, les polyisocyanates partiellement bloqués ne se débloquant pas dans les conditions du durcissement.

**2.** Procédé de préparation de résines de pâte éventuellement autodurcissantes à base de composés époxy, ces résines de pâte contenant

(a) des groupes ammonium quaternaire de formule (Ia)

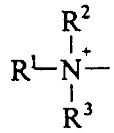

(Ia)

dans laquelle les restes $R^1$ à $R^3$ représentent indépendamment les uns des autres un reste hydrocarboné de 1 à 7 atomes de carbone portant éventuellement des groupes OH et/ou des groupes amino, et/ou contenant

éventuellement des atomes d'oxygène, ou deux de ces restes forment un noyau cycloaliphatique, et/ou des groupes ammonium quaternaire de formule (Ib)

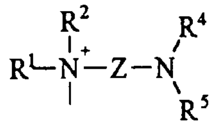

(Ib)

dans laquelle les restes $R^1$ et $R^2$ ont la signification donnée ci-dessus,

| | |
|---|---|
| Z | représente un reste alkylène linéaire, ramifié ou cyclique de 2 à 18 atomes de carbone, qui peut éventuellement porter des groupes OH et/ou contenir des atomes d'oxygène, et |
| $R^4$ et $R^5$ | représentent indépendamment l'un de l'autre un reste hydrocarboné de 2 à 50 atomes de carbone, qui peut éventuellement porter des groupes OH et/ou silane, et/ou contenir des atomes d'oxygène, ou l'un des deux restes $R^4$ et $R^5$ peut former un cycle avec Z, |

(b) des groupes OH et

(c) des groupements uréthane liés au composé époxy, et dont au moins 10 mol sur 100 mol dérivent d'un isocyanate monofonctionnel à longue chaîne contenant au moins 8 atomes de carbone,

la masse moléculaire moyenne en nombre $\overline{M}_n$ de ces résines de pâte étant comprise entre 500 et 10 000 g/mol, à condition que la résine de pâte ne contienne pas de groupe de formule (Ic)

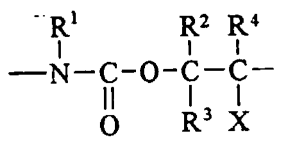

(Ic)

dans laquelle $R^1$ à $R^4$ représentent chacun, indépendamment les uns des autres, un atome d'hydrogène ou un reste hydrocarboné de 1 à 10 atomes de carbone, et X est un groupe hydroxy ou un reste isocyanate, selon lequel on fait réagir d'abord des composés (B), contenant au moins un groupe 1,2-époxy, avec des amines (A), avec la caractéristique selon laquelle on fait réagir le produit de réaction (C) obtenu avec des isocyanates monofonctionnels à longue chaîne (D1), éventuellement en mélange avec des isocyanates partiellement bloqués (D2), après quoi on procède éventuellement à la quaternisation, les polyisocyanates partiellement bloqués ne se débloquant pas dans les conditions du durcissement.

**3.** Procédé selon la revendication 1 ou 2, caractérisé en ce que l'on utilise comme amines (A) des amines de formule (III)

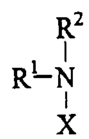

(III)

dans laquelle $R^1$ et $R^2$ ont la signification donnée pour la formule (Ia) ci-dessus et X est $R^3$ selon la formule (Ia) ou représente un atome d'hydrogène.

**4.** Procédé selon l'une au moins des revendications 1 à 3, caractérisé en ce que l'on utilise comme composés (B) des composés de formule (IV)

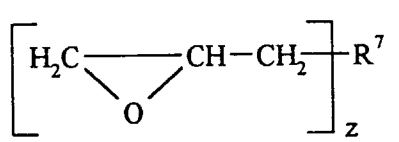

(IV)

dans laquelle

$R^7$ est le reste de valence z d'un polyéther, polyétherpolyol, polyester, polyesterpolyol, qui peut éventuellement contenir en outre des groupes $NR^8$, où $R^8$ est un atome d'hydrogène ou un groupe alkyle de 1 à 14 atomes de carbone ou hydroxyalkyle de 1 à 14 atomes de carbone, ou un reste hydrocarboné de valence z, de préférence un reste alkylène de 2 à 18 atomes de carbone, qui peut éventuellement porter aussi des groupes inertes ou non gênants, ou un reste polyamine (secondaire) de valence z,

z = 1 à 5, de préférence 2.

**5.** Procédé selon l'une au moins des revendications 1 à 4, caractérisé en ce que l'on utilise (A) et (B) en des quantités telles que le rapport du nombre de groupes amino réactifs vis-à-vis des groupes époxy aux groupes époxy est de 0,8-1,3 à 1.

**6.** Procédé selon l'une au moins des revendications 1 à 5, caractérisé en ce que l'on utilise comme isocyanates monofonctionnels à longue chaîne (D1) des monoisocyanates à longue chaîne de 8 à 22 atomes de carbone.

**7.** Procédé selon l'une au moins des revendications 1 à 6, caractérisé en ce que la fraction en moles d'isocyanate (D1) est de 50 à 100 % et la fraction en moles d'isocyanate (D2) est de 0 à 50 %.

**8.** Procédé selon l'une au moins des revendications 1 à 7, caractérisé en ce que les résines de pâte contiennent en moyenne 1 à 4 groupes (a) par molécule.

**9.** Procédé selon l'une au moins des revendications 1 à 8, caractérisé en ce que le nombre de groupes (b) est en moyenne de 1 à 20 par molécule.

**10.** Procédé selon l'une au moins des revendications 1 à 9, caractérisé en ce que le nombre de groupes (c) est en moyenne de 1 à 15 par molécule.

**11.** Pâte de pigments contenant une résine de pâte et un pigment qui y est dispersé, dans laquelle la résine de pâte est une résine à base de composés époxy qui contient

(a) des groupes ammonium quaternaire de formule (Ia)

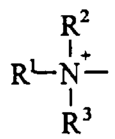

(Ia)

dans laquelle les restes $R^1$ à $R^3$ représentent indépendamment les uns des autres un reste hydrocarboné de 1 à 7 atomes de carbone portant éventuellement des groupes OH et/ou des groupes amino, et/ou contenant éventuellement des atomes d'oxygène, ou deux de ces restes forment un noyau cycloaliphatique, et/ou des groupes ammonium quaternaire de formule (Ib)

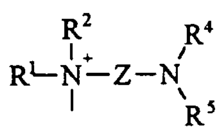

(Ib)

dans laquelle les restes $R^1$ et $R^2$ ont la signification donnée ci-dessus,

Z représente un reste alkylène linéaire, ramifié ou cyclique de 2 à 18 atomes de carbone, qui peut éventuellement porter des groupes OH et/ou contenir des atomes d'oxygène, et

$R^4$ et $R^5$ représentent indépendamment l'un de l'autre un reste hydrocarboné de 2 à 50 atomes de carbone, qui peut éventuellement porter des groupes OH et/ou silane, et/ou contenir des atomes d'oxygène, ou l'un des deux restes $R^4$ et $R^5$ peut former un cycle avec Z,

(b) des groupes OH et

(c) des groupements uréthane liés au composé époxy, et dont au moins 10 mol sur 100 mol dérivent d'un isocyanate monofonctionnel à longue chaîne contenant au moins 8 atomes de carbone,

la masse moléculaire moyenne en nombre $\overline{M}_n$ de ces résines de pâte étant comprise entre 500 et 10 000 g/mol, à condition que la résine de pâte ne contienne pas de groupe de formule (Ic) selon la revendication 1.

**12.** Utilisation des résines de pâte obtenues selon l'une au moins des revendications 1 à 10 pour la préparation de pâtes de pigments.